# EUROPEAN PATENT APPLICATION

(11) **EP 4 841 812 A1**
(43) Date of publication of application: **18.11.2026**
(21) Application number: 26167664.7
(22) Date of filing: 25.03.2026
(51) Int. Cl.: H01M 50/566, H01M 50/15, H01M 50/55, H01M 50/103, H01M 50/176, H01M 50/528, H01M 50/555

(54) **SECONDARY BATTERY AND BATTERY MODULE INCLUDING THE SAME**

(30) Priority: 12.05.2025 KR 20250061359
(71) Applicant: SAMSUNG SDI CO., LTD., Yongin-si, Gyeonggi-do 17084 (KR)
(72) Inventor: JEON, Du Seong, 16678 Suwon-si (KR); CHAE, Hee Dong, 16678 Suwon-si (KR); LEE, Ju Hyeon, 16678 Suwon-si (KR); NAM, Jin Won, 16678 Suwon-si (KR); LEE, Young Jin, 16678 Suwon-si (KR); YEOM, Gil Choun, 16678 Suwon-si (KR); MOON, Dea Yon, 16678 Suwon-si (KR)
(74) Representative: Maiwald GmbH

(57) **Abstract**

A secondary battery and a battery module including the same are disclosed. A secondary battery includes a case, an electrode assembly accommodated in the case and including a first electrode and a second electrode, and a cap plate assembly coupled to an opening of the case, and the cap plate assembly includes a cap plate including a first terminal hole, a first connection member on an inner side surface of the cap plate and electrically connected to the first electrode, and a first terminal on an outer side surface of the cap plate and connected to the first connection member through the first terminal hole.

## Description

### BACKGROUND

### 1. Field of the Invention

Aspects of embodiments of the present disclosure relate to a secondary battery and a battery module including the same.

### 2. Discussion of Related Art

Recently, electronic devices using batteries have been rapidly spreading across various fields, such as mobile phones, notebook computers, electric vehicles, energy storage systems (ESS), ships, and the like, and the demand for secondary batteries with high energy density and high capacity is rapidly increasing with this supply. Accordingly, research and development for improving the performance of lithium secondary batteries is being actively conducted.

A lithium secondary battery is a battery including a positive electrode and a negative electrode including active materials capable of intercalating and deintercalating lithium ions, and an electrolyte, and produces electrical energy due to oxidation and reduction reactions when lithium ions are intercalated/deintercalated into/from the positive electrode and the negative electrode.

The above-described information disclosed in the technology that forms the background of the present disclosure is provided to facilitate understanding of the background of the present disclosure and may include information that does not constitute the related art.

### SUMMARY

According to an aspect of the present disclosure, a secondary battery capable of reliably implementing an electrical connection structure between an electrode assembly and a terminal by a simple process, and a battery module including the same, are provided.

The above and other aspects and features of embodiments of the present disclosure will be described in or will be apparent from the following description of some embodiments of the present disclosure.

According to one or more embodiments of the present disclosure, a secondary battery includes: a case; an electrode assembly accommodated in the case and including a first electrode and a second electrode; and a cap plate assembly coupled to an opening of the case, wherein the cap plate assembly includes: a cap plate including a first terminal hole; a first connection member on an inner side surface of the cap plate and electrically connected to the first electrode; and a first terminal on an outer side surface of the cap plate and connected to the first connection member through the first terminal hole.

The first connection member and the first terminal may be joined to each other with the cap plate therebetween and integrally bonded with the cap plate.

The first connection member and the first terminal may be made of different materials and joined to each other by ultrasonic fusion.

The first connection member and the first terminal may be ultrasonically fused by supporting the first terminal by an anvil of an ultrasonic welder, and the first connection member being pressed toward the first terminal by a horn of the ultrasonic welder and receiving ultrasonic vibrations.

The electrode assembly may include a first tab member extending from the first electrode toward the first connection member, and the first connection member may be joined to the first tab member by a laser passing through the first terminal hole.

The first connection member may include a first connection main body that faces the first terminal hole at the inner side surface of the cap plate and is in contact with the first tab member, and a first support formed at an edge portion of the first connection main body and facing the inner side surface of the cap plate.

The first connection main body may include a first terminal connection plate that is in contact with the first terminal, and a first tab connection plate that is connected to the first terminal connection plate, in contact with the first tab member, and exposed to an outside of the cap plate.

An outer side surface of the first tab connection plate may be exposed to the outside of the cap plate, and an inner side surface of the first tab connection plate may face the first tab member.

The first tab member may include a first inner tab member, and a first outer tab member spaced apart from the first inner tab member, and the first tab connection plate may include: a first inner tab connection portion that is in contact with the first inner tab member, and a first outer tab connection portion that is spaced apart from the first inner tab connection portion and is in contact with the first outer tab member.

The first terminal connection plate may include a first block connection portion that is in contact with the first terminal between the first inner tab connection portion and the first outer tab connection portion.

The first terminal connection plate may further include a second block connection portion spaced apart from the first block connection portion with the first inner tab connection portion therebetween.

The first terminal connection plate may further include a third block connection portion spaced apart from the first block connection portion with the first outer tab connection portion therebetween.

The first terminal may include a first block piece that is in contact with the first block connection portion, a second block piece spaced apart from the first block piece with the first inner tab connection portion therebetween, and a third block piece spaced apart from the first block piece with the first outer tab connection portion therebetween.

The first connection member may further include one or more first grooves formed concavely toward the first tab member on the first tab connection plate.

The cap plate assembly may further include an adhesive member applied to the first terminal hole and cured while being in contact with the first connection member and the first terminal, and the laser may pass through the adhesive member to reach the first connection member.

The first terminal may include one or more first terminal blocks facing the first connection member, and one or more first opening holes open between the first terminal blocks and forming a path through which joining energy may pass and reach the first connection member.

The first terminal block may include a first block piece on the first terminal hole, and a second block piece spaced apart from the first block piece on the first terminal hole, and defining a first opening hole of the one or more first opening holes between the first block piece and the second block piece.

The first terminal block may further include a third block piece spaced apart from the first block piece on an opposite side from the second block piece and defining a first opening hole of the one or more first opening holes between the first block piece and the third block piece.

The cap plate may further include a second terminal hole spaced apart from the first terminal hole, and the cap plate assembly may further include a second connection member on the inner side surface of the cap plate and electrically connected to the second electrode, and a second terminal on the outer side surface of the cap plate and connected to the first connection member through the second terminal hole.

According to an aspect of the present disclosure, a battery module includes: a housing; and a plurality of secondary batteries accommodated in the housing, wherein each of the secondary batteries includes: a case; an electrode assembly accommodated in the case and including a first electrode and a second electrode; and a cap plate assembly coupled to an opening of the case, and the cap plate assembly includes: a cap plate including a first terminal hole; a first connection member on an inner side surface of the cap plate and electrically connected to the first electrode; and a first terminal on an outer side surface of the cap plate and connected to the first connection member through the first terminal hole.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is a perspective view schematically illustrating a configuration of a battery module according to an embodiment of the present disclosure;
FIG. 2 is a perspective view schematically illustrating a configuration of a secondary battery according to an embodiment of the present disclosure;
FIG. 3 is an exploded perspective view schematically illustrating a main portion of the configuration of the secondary battery according to an embodiment of the present disclosure;
FIG. 4 is a view schematically illustrating a configuration of an electrode assembly according to an embodiment of the present disclosure;
FIG. 5 is an enlarged cross-sectional view schematically illustrating main portions of configurations of a first tab member, a first connection member, and a first terminal according to an embodiment of the present disclosure;
FIG. 6 is an enlarged cross-sectional view schematically illustrating main portions of configurations of a second tab member, a second connection member, and a second terminal according to an embodiment of the present disclosure;
FIGS. 7 and 8 are perspective views schematically illustrating a cap plate assembly according to an embodiment of the present disclosure;
FIG. 9 is an enlarged view of a portion of the cap plate assembly according to an embodiment of the present disclosure where the first connection member and the first terminal are disposed;
FIG. 10 is an exploded perspective view of a main portion of FIG. 9;
FIG. 11 is an enlarged view of a portion of the cap plate assembly according to an embodiment of the present disclosure where the second connection member and the second terminal are disposed;
FIG. 12 is an exploded perspective view of a main portion in FIG. 11;
FIG. 13 is a cross-sectional view taken along the line A-A' in FIG. 9;
FIG. 14 is a cross-sectional view taken along line B-B' in FIG. 9;
FIG. 15 is an enlarged partial view of FIG. 14;
FIGS. 16 and 17 are perspective views schematically illustrating a main portion of the cap plate according to an embodiment of the present disclosure;
FIGS. 18 and 19 are perspective views schematically illustrating a main portion of the first connection member according to an embodiment of the present disclosure;
FIG. 20 is a perspective view schematically illustrating the first terminal according to an embodiment of the present disclosure;
FIG. 21 is a perspective view schematically illustrating a first sealing member according to an embodiment of the present disclosure;
FIG. 22 is a perspective view schematically illustrating a first insulating member according to an embodiment of the present disclosure;
FIGS. 23 to 26 are views for describing a process of manufacturing the cap plate assembly according to an embodiment of the present disclosure;
FIG. 27 is a perspective view schematically illustrating a main portion of a cap plate assembly according to another embodiment of the present disclosure;
FIG. 28 is a cross-sectional view taken along the line C-C' in FIG. 27; and
FIGS. 29 to 31 are views for describing a process of joining a case, an electrode assembly, and the cap plate assembly to each other according to an embodiment of the present disclosure.

### DETAILED DESCRIPTION

Herein, some embodiments of the present disclosure will be described in further detail with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are used for describing embodiments of the present disclosure and are not intended to limit the present disclosure.

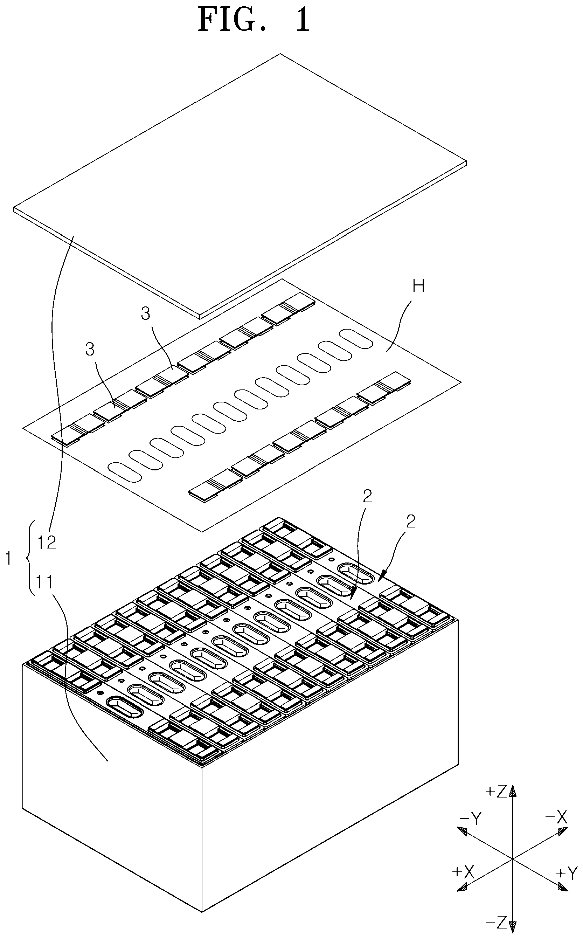

FIG. 1 is a perspective view schematically illustrating a configuration of a battery module according to an embodiment of the present disclosure.

Referring to FIG. 1, a battery module according to an embodiment of the present disclosure includes a housing 1, a secondary battery 2, and a bus bar 3.

The housing 1 may form a general exterior of the battery module and provide a space in which the secondary battery 2 may be accommodated. The housing 1 according to an embodiment of the present disclosure may include a housing body 11 and a cover 12. The housing body 11 may be formed to have a shape of a box with an empty interior and an open side. The cover 12 may be coupled to the housing body 11 and may close the internal space of the housing body 11.

A cross-sectional shape of the housing body 11 is not limited to the rectangular shape illustrated in FIG.1 and may have any of various shapes, such as a polygonal shape, a circular shape, an oval shape, or the like. The cover 12 may be formed to have a generally plate shape and may be disposed to face the open side of the housing body 11. The cover 12 may be fixed to the housing body 11 by any of various types of coupling methods, such as any of bolting, welding, fitting, and the like.

The secondary battery 2 may function as a unit structure which stores and supplies power in the battery module. The secondary battery 2 may be disposed in the housing 1. A plurality of secondary batteries 2 may be provided. The plurality of secondary batteries 2 may be arranged in two or more rows in at least one of a longitudinal direction (an X-axis direction based on FIG. 1) and a width direction (a Y-axis direction based on FIG. 1) of the housing 1.

FIG. 1 illustrates an example in which the plurality of secondary batteries 2 are arranged in twelve rows in the longitudinal direction of the housing 1, but the arrangement of the plurality of secondary batteries 2 is not limited thereto and may be designed to have various forms. The plurality of secondary batteries 2 may be disposed parallel to each other. The number of secondary batteries 2 may be varied depending, for example, on a size, shape, and the like of the housing 1.

The bus bar 3 may electrically connect the plurality of secondary batteries 2. The bus bar 3 according to an embodiment of the present disclosure may be disposed between the cover 12 and the secondary batteries 2. A plurality of bus bars 3 may be provided. Each of the bus bars 3 may connect a pair of neighboring secondary batteries 2 in series or parallel.

The bus bar 3 may be formed of an electrically conductive material, such as copper, aluminum, nickel, or the like. A specific shape of the bus bar 3 is not limited to that illustrated in FIG. 1 and may have any of various shapes capable of electrically connecting the neighboring secondary batteries 2.

The plurality of bus bars 3 may be supported in the housing 1 by a bus bar holder H. The bus bar holder H according to an embodiment of the present disclosure may be formed to have a flat plate shape. The bus bar holder H may be disposed between the cover 12 and the secondary batteries 2. The bus bars 3 may be fixed to the bus bar holder H by any of various types of coupling methods, such as any of fitting, bolting, injection joining, and the like. In an embodiment, the bus bar holder H may be configured to include an electrically insulating polymer compound material.

Herein, the secondary battery 2 according to one or more embodiments of the present disclosure will be described. Herein, an example in which the secondary battery 2 is a prismatic lithium ion secondary battery will be described. However, the present disclosure is not limited thereto, and the secondary battery may be a lithium polymer battery or a cylindrical battery, for example.

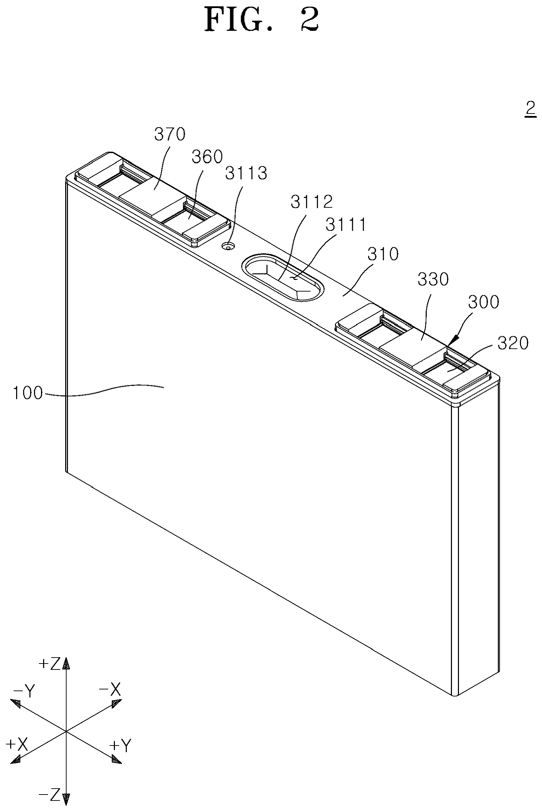

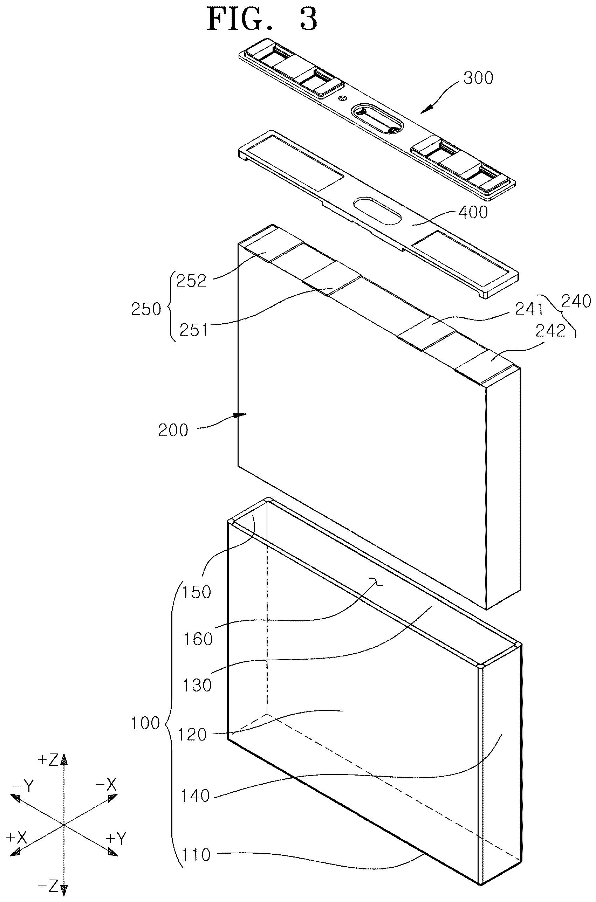

FIG. 2 is a perspective view schematically illustrating a configuration of a secondary battery according to an embodiment of the present disclosure; and FIG. 3 is an exploded perspective view schematically illustrating a main portion of the configuration of the secondary battery according to an embodiment of the present disclosure.

A first direction to be described below may be, for example, a +Z-axis direction based on FIGS. 2 and 3, a second direction may be, for example, a -Y-axis direction, and a third direction may be, for example, a -X-axis direction.

Referring to FIGS. 2 and 3, the secondary battery 2 according to an embodiment of the present disclosure includes a case 100, an electrode assembly 200, and a cap plate assembly 300.

The case 100 may provide an internal space in which the electrode assembly 200 may be accommodated. The case 100 include a material and have a rigidity capable of protecting the electrode assembly 200 accommodated therein. The case 100 may include a metal material, or may include a synthetic resin material, such as plastic or the like. The case 100 may form a general exterior of the secondary battery 2. A portion of the case 100 may have an open shape, rather than being sealed, and the electrode assembly 200 may be inserted into and accommodated in the case 100 through an opening 160 which is open.

The cap plate assembly 300 may have an overall shape corresponding to the opening 160 and may be disposed to cover the opening 160 of the case 100. The cap plate assembly 300 may be coupled to the case 100 and may seal the opening 160. The case 100 and the cap plate assembly 300 together may form a general exterior of the secondary battery 2.

The electrode assembly 200 may function as a unit structure that performs charging and discharging operations of power in the secondary battery. The electrode assembly 200 may be accommodated in the case 100. The electrode assembly 200 may be electrically connected to the bus bar 3 or the like disposed on the outside of the case 100 through the cap plate assembly 300 while being covered by the case 100.

The case 100 according to an embodiment of the present disclosure may include a bottom portion 110, a front portion 120, a rear portion 130, a first side portion 140, and a second side portion 150.

The bottom portion 110 may form an exterior of a lower side (based on FIG. 3) of the case 100. The bottom portion 110 according to an embodiment of the present disclosure may have a rectangular plate shape. The bottom portion 110 may be seated on a bottom surface of the housing body 11. The front portion 120, the rear portion 130, the first side portion 140, and the second side portion 150 may form an exterior of a peripheral surface of the case 100.

The front portion 120, the rear portion 130, the first side portion 140, and the second side portion 150 according to an embodiment of the present disclosure may have plate shapes extending from edges of the bottom portion 110 in the first direction. The front portion 120, the rear portion 130, the first side portion 140, and the second side portion 150 may be disposed to surround a space above the bottom portion 110. In an embodiment, the front portion 120, the rear portion 130, the first side portion 140, and the second side portion 150 may be disposed to form a rectangular cross-sectional shape.

The front portion 120 and the rear portion 130 may be disposed to face each other in the third direction. The rear portion 130 may be disposed to be spaced a certain distance apart from the front portion 120 in the third direction. The front portion 120 and the rear portion 130 may be disposed parallel to each other. Areas of the front portion 120 and the rear portion 130 may be the same.

The first side portion 140 and the second side portion 150 may be disposed to face each other in the second direction. The second side portion 150 may be disposed to be spaced a certain distance apart from the first side portion 140 in the second direction. The first side portion 140 and the second side portion 150 may be disposed parallel to each other. Areas of the first side portion 140 and the second side portion 150 may be the same. The areas of the first side portion 140 and the second side portion 150 may be smaller than the areas of the front portion 120 and the rear portion 130.

The case 100 may further include the opening 160. The opening 160 according to an embodiment of the present disclosure may be a space surrounded by upper end portions of the front portion 120, the rear portion 130, the first side portion 140, and the second side portion 150. The opening 160 may interconnect spaces inside and outside the case 100. The case 100 according to an embodiment of the present disclosure may have a rectangular parallelepiped shape with an open upper side.

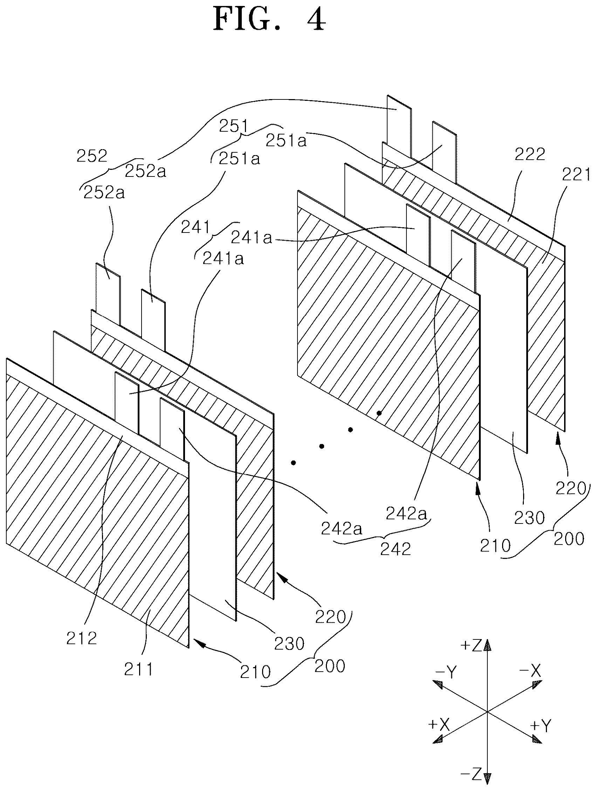

FIG. 4 is a view schematically illustrating a configuration of the electrode assembly according to an embodiment of the present disclosure.

Referring to FIGS. 2 to 4, the electrode assembly 200 according to an embodiment of the present disclosure may include a first electrode 210, a second electrode 220, a separator 230, a first tab member 240, and a second tab member 250.

A plurality of first electrodes 210, separators 230, and second electrodes 220 may be provided. Herein, the electrode assembly 200 having a stacked form in which the plurality of first electrodes 210, separators 230, and second electrodes 220 are sequentially stacked in the third direction will be described as an example. However, a form of the electrode assembly 200 is not limited thereto, and the electrode assembly 200 may also have a form in which the first electrodes 210, the separators 230, and the second electrodes 220 are stacked and wound in a clockwise direction or counterclockwise direction around a winding axis.

The first electrode 210 may function as either a positive electrode or a negative electrode of the electrode assembly 200. Herein, an example in which the first electrode 210 is a positive electrode of the electrode assembly 200 will be described. However, the first electrode 210 is not limited thereto, and may function as a negative electrode of the electrode assembly 200.

The first electrode 210 according to an embodiment of the present disclosure may be formed to have a form of a foil including a metal material, such as aluminum or an aluminum alloy. A type, size, shape, and the like of the first electrode 210 are not particularly limited as long as the first electrode 210 has conductivity and does not cause a chemical change in the secondary battery. A cross-sectional shape of the first electrode 210 may have any of various shapes in addition to the rectangular shape illustrated in FIG. 4.

A plurality of first electrodes 210 may be provided. The plurality of first electrodes 210 may be arranged between the front portion 120 and the rear portion 130 of the case 100 in the third direction. A number of the first electrodes 210 may be varied depending on a charging capacity and the like of the secondary battery 2.

A first active material layer 211 may be applied on at least a portion of the first electrode 210. The first active material layer 211 may be applied on both, or opposite, surfaces of the first electrode 210, or may be applied on only one surface of the first electrode 210.

In an embodiment, the first electrode 210 functions as the positive electrode, and the first active material layer 211 may include a positive electrode active material.

The positive electrode active material may be a compound capable of reversible intercalation and deintercalation of lithium (lithiated intercalation compound). In an embodiment, one or more of composite oxides of lithium and a metal selected from cobalt, manganese, nickel, iron, and a combination thereof may be used.

In an example, the positive electrode active material may include at least one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, LNCM). Here, 0<x<1, 0<y<1, 0<z<1, and x+y+z=1 may be satisfied. The positive electrode active material may include only one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, LNCM) and include two or all of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, LNCM).

The first active material layer 211 may further include a positive electrode conductive material.

The positive electrode conductive material may impart conductivity to the first active material layer 211, and any suitable material which does not cause a chemical change and is electrically conductive may be used. Examples of the positive electrode conductive material may include a carbon-based material, such as natural graphite, artificial graphite, carbon black, acetylene black, Ketjen black, carbon fibers, carbon nanofibers, or carbon nanotubes, a metal-based material in the form of metal powder or metal fibers containing copper, nickel, aluminum, and silver, a conductive polymer, such as a polyphenylene derivative, or a mixture thereof.

The first active material layer 211 may further include a positive electrode binder.

The positive electrode binder may attach the particles constituting the positive electrode active material to each other well, and also attach the positive electrode active material to the first electrode 210 well.

Examples of the positive electrode binder include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

If the aqueous binder is used as the positive electrode binder, a cellulose-based compound capable of imparting viscosity may be further included. The cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may include a polymeric material capable of being fiberized, for example, polytetrafluoroethylene, polyvinylidene fluoride, a polyvinylidene fluoride-hexafluoropropylene copolymer, polyethylene oxide, or a combination thereof.

The first electrode 210 may include a first uncoated portion 212 on which the first active material layer 211 is not applied. The first uncoated portion 212 according to an embodiment of the present disclosure may be disposed at an upper end region of the first electrode 210 disposed to face the opening 160 of the case 100. However, a form of the first uncoated portion 212 is not limited thereto, and, in an embodiment, the first uncoated portion 212 may be formed across an entire edge region of the first electrode 210.

The second electrode 220 may function as the other of the positive electrode and the negative electrode of the electrode assembly 200. Herein, an example in which the second electrode 220 is the negative electrode of the electrode assembly 200 will be described. However, the second electrode 220 is not limited thereto, and may function as the positive electrode of the electrode assembly 200.

A plurality of second electrodes 220 may be provided. The plurality of second electrodes 220 may be arranged between the front portion 120 and the rear portion 130 of the case 100 in the third direction. The first electrodes 210 and the second electrodes 220 may be alternately disposed in the third direction. The second electrode 220 may be spaced a certain interval apart from the first electrode 210 in the third direction.

The second electrode 220 according to an embodiment of the present disclosure may have a form of a foil including a metal material, such as copper, a copper alloy, nickel, or a nickel alloy. A type, size, shape, and the like of the second electrode 220 are not particularly limited as long as the second electrode 220 has conductivity and does not cause a chemical change in the secondary battery. A cross-sectional shape of the second electrode 220 may have any of various shapes in addition to the rectangular shape illustrated in FIG. 4.

A second active material layer 221 may be applied on at least a portion of the second electrode 220. The second active material layer 221 may be applied on both, or opposite, surfaces of the second electrode 220, or may be applied on only one surface of the second electrode 220.

In an embodiment, the second electrode 220 functions as the negative electrode, and the second active material layer 221 may include a negative electrode active material.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may include a carbon-based negative electrode active material, for example, crystalline carbon, amorphous carbon, or a combination thereof. Examples of the crystalline carbon may include graphite such as amorphous, plate-shaped, flaky (e.g., flake-shaped), spherical, or fibrous natural graphite or artificial graphite, and examples of the amorphous carbon may include soft carbon or hard carbon, mesophase pitch carbide, calcined coke, or the like.

In an embodiment, an alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

As the material capable of doping and dedoping lithium, a Si-based negative electrode active material or Sn-based negative electrode active material may be used. The Si-based negative electrode active material may include silicon, a silicon-carbon composite, SiOx (0<x≤2), a Si-Q alloy (where Q is selected from alkali metals, alkaline earth metals, group 13 elements, group 14 elements (excluding Si), group 15 elements, group 16 elements, transition metals, rare earth elements, and a combination thereof), or a combination thereof. The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled and an amorphous carbon coating layer (a shell) located on a surface of the secondary particle. The amorphous carbon may also be located between the silicon primary particles, and, for example, the silicon primary particles may be coated with the amorphous carbon. The secondary particle may be dispersed and present in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

The second active material layer 221 may further include a negative electrode conductive material and a negative electrode binder.

The negative electrode conductive material may impart conductivity to the second active material layer 221, and any suitable material which does not cause a chemical change and is electrically conductive may be used. Examples of the negative electrode conductive material may include a carbon-based material, such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, and silver, a conductive polymer, such as a polyphenylene derivative, or a mixture thereof.

The negative electrode binder may attach the particles constituting the negative electrode active material to each other well, and also attach the negative electrode active material to the second electrode 220 well.

Examples of the negative electrode binder include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

If the aqueous binder is used as the negative electrode binder, a cellulose-based compound capable of imparting viscosity may be further included. The cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may include a polymeric material capable of being fiberized, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion 222 on which the second active material layer 221 is not applied. The second uncoated portion 222 according to an embodiment of the present disclosure may be disposed at an upper end region of the second electrode 220 disposed to face the opening 160 of the case 100. However, a form of the second uncoated portion 222 is not limited thereto, and, in an embodiment, the second uncoated portion 222 may be formed across an entire edge region of the second electrode 220.

The separator 230 may be disposed between the first electrode 210 and the second electrode 220. The separator 230 may prevent or substantially prevent a short circuit between the first electrode 210 and the second electrode 220 while allowing lithium ions to move between the first electrode 210 and the second electrode 220.

In an embodiment, the separator 230 may be disposed to surround (e.g., entirely surround) a surface region of the electrode assembly 200. Accordingly, the separator 230 may prevent or substantially prevent the first electrode 210 and the second electrode 220 from being directly exposed to the outside of the electrode assembly 200.

As the separator 230, polyethylene, polypropylene, polyvinylidene fluoride or multilayer films of two or more layers thereof may be used, and mixed multilayer films such as a polyethylene/polypropylene two-layer separator, a polyethylene/polypropylene/polyethylene three-layer separator, a polypropylene/polyethylene/polypropylene three-layer separator, or the like may be used.

The separator 230 may include a porous substrate and a coating layer containing an organic material, an inorganic material, or a combination thereof, located on one or both, or opposite, surfaces of the porous substrate.

The porous substrate may be a polymer film formed of any polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth) acryl-based polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and inorganic material may be present as a mixture in a single coating layer or may be present in a form in which a coating layer including an organic material and a coating layer including an inorganic material are stacked.

The first tab member 240 may be connected to the first electrode 210 and may protrude outward from the electrode assembly 200. The first tab member 240 may extend from the first electrode 210 in the first direction (the +Z-axis direction). The first tab member 240 may extend from the first electrode 210 toward a first connection member 320 (to be described below). In an embodiment, the first electrode 210 is the positive electrode, and the first tab member 240 may function as a positive electrode tab of the secondary battery 2. However, the first tab member 240 is not limited thereto, and may function as a negative electrode tab of the secondary battery 2 if the first electrode 210 is the negative electrode.

The second tab member 250 may be connected to the second electrode 220 and may protrude outward from the electrode assembly 200. The second tab member 250 may extend from the second electrode 220 in the first direction (the +Z-axis direction). The second tab member 250 may extend from the second electrode 220 toward a second connection member 360 (to be described below). In an embodiment, the second electrode 220 is the negative electrode, and the second tab member 250 may function as a negative electrode tab of the secondary battery 2. However, the second tab member 250 is not limited thereto, and may function as a positive electrode tab of the secondary battery 2 if the second electrode 220 is the positive electrode.

The first tab member 240 and the second tab member 250 may be spaced apart from each other in the second direction. The second tab member 250 may be disposed to be spaced a certain distance apart from the first tab member 240 in the second direction. The first tab member 240 and the second tab member 250 may be sequentially disposed in the second direction.

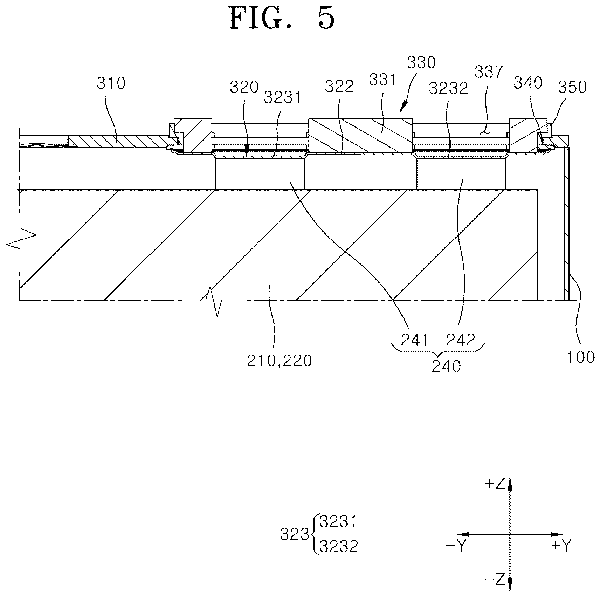

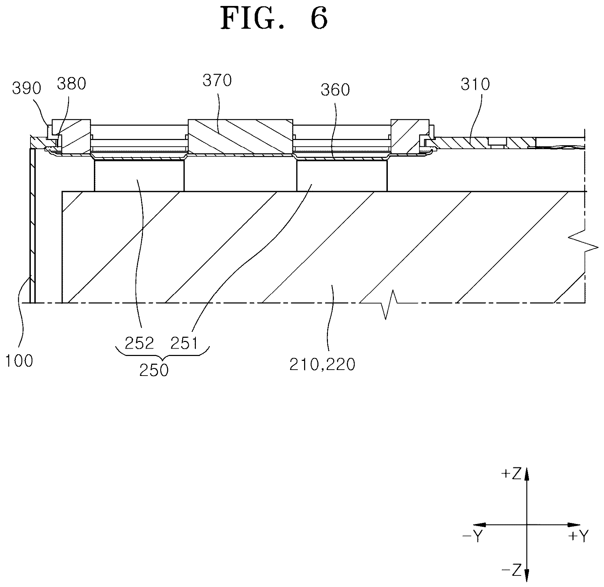

FIG. 5 is an enlarged cross-sectional view schematically illustrating main portions of configurations of the first tab member, the first connection member, and a first terminal according to an embodiment of the present disclosure; and FIG. 6 is an enlarged cross-sectional view schematically illustrating main portions of configurations of the second tab member, the second connection member, and a second terminal according to one embodiment of the present disclosure. In FIGS. 5 and 6, an insulating plate 400 (to be described below) is omitted for convenience of description.

Referring to FIGS. 3 to 6, a distance from the first side portion 140 to the first tab member 240 may be smaller than a distance from the second side portion 150 to the first tab member 240. That is, the first tab member 240 may be disposed at a position relatively closer to the first side portion 140 than the second side portion 150 based on a central portion of the electrode assembly 200 facing a vent 3112 in the case 100.

A distance from the second side portion 150 to the second tab member 250 may be smaller than a distance from the first side portion 140 to the second tab member 250. That is, the second tab member 250 may be disposed at a position relatively closer to the second side portion 150 than the first side portion 140 based on the central portion of the electrode assembly 200 facing the vent 3112 in the case 100.

The first tab member 240 according to an embodiment of the present disclosure may include a first inner tab member 241 and a first outer tab member 242.

The first inner tab member 241 and the first outer tab member 242 may extend from the first electrode 210 in the first direction. In an example, the first inner tab member 241 and the first outer tab member 242 may extend from the inside of the case 100 toward the cap plate assembly 300.

The first inner tab member 241 and the first outer tab member 242 may be spaced apart from each other in the second direction. A distance from the first side portion 140 to the first outer tab member 242 may be smaller than a distance from the first side portion 140 to the first inner tab member 241. Accordingly, in an embodiment, the first outer tab member 242 and the first inner tab member 241 may be sequentially disposed from the first side portion 140 in the second direction.

The first inner tab member 241 according to an embodiment of the present disclosure may include a plurality of first inner tabs 241a.

The first inner tab 241a according to an embodiment of the present disclosure may have a form of a foil extending from the first uncoated portion 212 of the first electrode 210 in the first direction. In an embodiment, the first inner tab 241a may have a generally rectangular shape. However, the shape of the first inner tab 241a is not limited thereto, and may have any of various shapes.

In an embodiment, the first inner tab 241a may be integrally formed with the first electrode 210. For example, the first inner tab 241a may be a remaining region of the first uncoated portion 212 which remains after a partial region of the first uncoated portion 212 is cut or removed by notching or the like. In an embodiment, the first inner tab 241a may be manufactured separately from the first electrode 210 and then connected to the first uncoated portion 212 by welding or the like. In an embodiment, a material of the first inner tab 241a may be the same as the material of the first electrode 210.

A number of first inner tabs 241a may be the same as a number of first electrodes 210. Each of the first inner tabs 241a may individually extend from the first uncoated portion 212 of a different first electrode 210. The plurality of first inner tabs 241a may be stacked in the third direction. The plurality of first inner tabs 241a may be disposed parallel to each other. Accordingly, the first inner tab member 241 according to an embodiment of the present disclosure may be an assembly of the plurality of first inner tabs 241a stacked in the third direction. Neighboring first inner tabs 241a may be in contact with each other and may be spaced apart from each other by a thickness of the separator 230.

The first outer tab member 242 according to an embodiment of the present disclosure may include a plurality of first outer tabs 242a.

The first outer tab 242a according to an embodiment of the present disclosure may have a form of a foil extending from the first uncoated portion 212 of the first electrode 210 in the first direction. The first outer tab 242a may have a generally rectangular shape. However, the shape of the first outer tab 242a is not limited thereto, and may have any of various shapes. A shape and area of the first outer tab 242a may be the same as those of the first inner tab 241a or may be configured differently from the first inner tab 241a.

The first outer tab 242a and the first inner tab 241a may be spaced apart from each other in the second direction. In an example, the first outer tab 242a and the first inner tab 241a may be sequentially disposed in the second direction on the first uncoated portion 212.

In an embodiment, the first outer tab 242a may be integrally formed with the first electrode 210. For example, the first outer tab 242a may be a remaining region of the first uncoated portion 212 which remains after a partial region of the first uncoated portion 212 is cut or removed by notching or the like. In an embodiment, the first outer tab 242a may be manufactured separately from the first electrode 210 and then connected to the first uncoated portion 212 by welding or the like. In an embodiment, a material of the first outer tab 242a may be the same as the material of the first electrode 210.

A number of first outer tabs 242a may be the same as the number of first electrodes 210. Each of the first outer tabs 242a may individually extend from the first uncoated portion 212 of a different first electrode 210. The plurality of first outer tabs 242a may be stacked in the third direction. The plurality of first outer tabs 242a may be disposed parallel to each other. Accordingly, the first outer tab member 242 according to an embodiment of the present disclosure may be an assembly of the plurality of first outer tabs 242a stacked in the third direction. Neighboring first outer tabs 242a may be in contact with each other and may be spaced apart from each other by the thickness of the separator 230.

The second tab member 250 according to an embodiment of the present disclosure may include a second inner tab member 251 and a second outer tab member 252.

The second inner tab member 251 and the second outer tab member 252 may extend from the second electrode 220 in the first direction. In an example, the second inner tab member 251 and the second outer tab member 252 may extend from the inside of the case 100 toward the cap plate assembly 300.

The second inner tab member 251 and the second outer tab member 252 may be spaced apart from each other in the second direction. A distance from the second side portion 150 to the second outer tab member 252 may be smaller than a distance from the second side portion 150 to the second inner tab member 251. Accordingly, in an embodiment, the second outer tab member 252 and the second inner tab member 251 may be sequentially disposed from the second side portion in a direction opposite to the second direction.

The second inner tab member 251 according to an embodiment of the present disclosure may include a plurality of second inner tabs 251a.

The second inner tab 251a according to an embodiment of the present disclosure may have a form of a foil extending from the second uncoated portion 222 of the second electrode 220 in the first direction. The second inner tab 251a may have a generally rectangular shape. However, the shape of the second inner tab 251a is not limited thereto, and may have any of various shapes.

In an embodiment, the second inner tabs 251a may be integrally formed with the second electrode 220. For example, the second inner tab 251a may be a remaining region of the second uncoated portion 222 which remains after a partial region of the second uncoated portion 222 is cut or removed by notching or the like. In an embodiment, the second inner tab 251a may be manufactured separately from the second electrode 220 and then connected to the second uncoated portion 222 by welding or the like. In an embodiment, a material of the second inner tab 251a may be the same as the material of the second electrode 220.

A number of second inner tabs 251a may be the same as a number of second electrodes 220. Each of the second inner tabs 251a may individually extend from the second uncoated portion 222 of a different second electrode 220. The plurality of second inner tabs 251a may be stacked in the third direction. The plurality of second inner tabs 251a may be disposed parallel to each other. Accordingly, the second inner tab member 251 according to an embodiment of the present disclosure may be an assembly of the plurality of second inner tabs 251a stacked in the third direction. Neighboring second inner tabs 251a may be in contact with each other and may be spaced apart from each other by the thickness of the separator 230.

The second outer tab member 252 according to an embodiment of the present disclosure may include a plurality of second outer tabs 252a.

The second outer tab 252a according to an embodiment of the present disclosure may have a form of a foil extending from the second uncoated portion 222 of the second electrode 220 in the first direction. The second outer tab 252a may have a generally rectangular shape. However, the shape of the second outer tab 252a is not limited thereto, and may have any of various shapes. A shape and area of the second outer tab 252a may be the same as those of the second inner tab 251a, or may be configured differently from the second inner tab 251a.

The second outer tab 252a and the second inner tab 251a may be spaced apart from each other in the second direction. In an example, the second outer tab 252a and the second inner tab 251a may be sequentially disposed on the second uncoated portion 222 in the direction opposite to the second direction.

In an embodiment, the second outer tab 252a may be integrally formed with the second electrode 220. For example, the second outer tab 252a may be a remaining region of the second uncoated portion 222 which remains after a partial region of the second uncoated portion 222 is cut or removed by notching or the like. In an embodiment, the second outer tab 252a may be manufactured separately from the second electrode 220 and then connected to the second uncoated portion 222 by welding or the like. In an embodiment, a material of the second outer tab 252a may be the same as the material of the second electrode 220.

A number of second outer tabs 252a may be the same as the number of second electrodes 220. Each of the second outer tabs 252a may individually extend from the second uncoated portion 222 of a different second electrode 220. The plurality of second outer tabs 252a may be stacked in the third direction. The plurality of second outer tabs 252a may be disposed parallel to each other. Accordingly, the second outer tab member 252 according to an embodiment of the present disclosure may be an assembly of the plurality of second outer tabs 252a stacked in the third direction. Neighboring second outer tabs 252a may be in contact with each other and may be spaced apart from each other by the thickness of the separator 230.

Herein, the cap plate assembly 300 according to various embodiments of the present disclosure will be described.

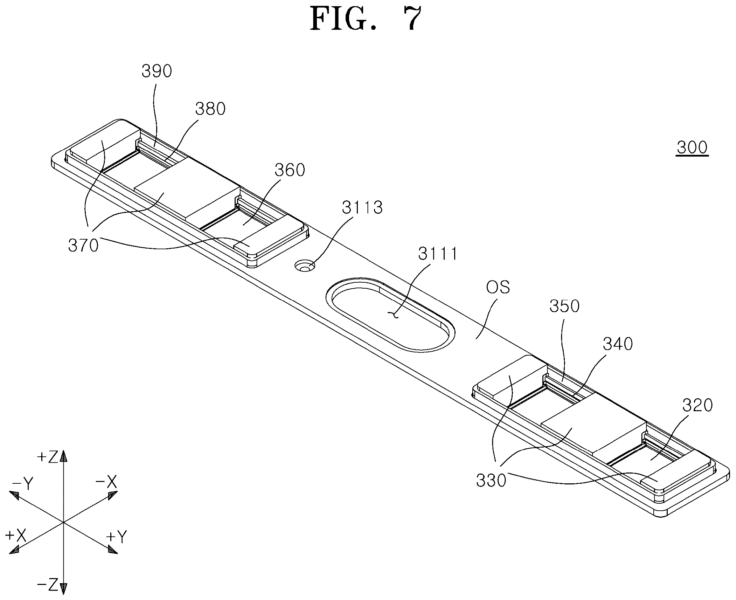

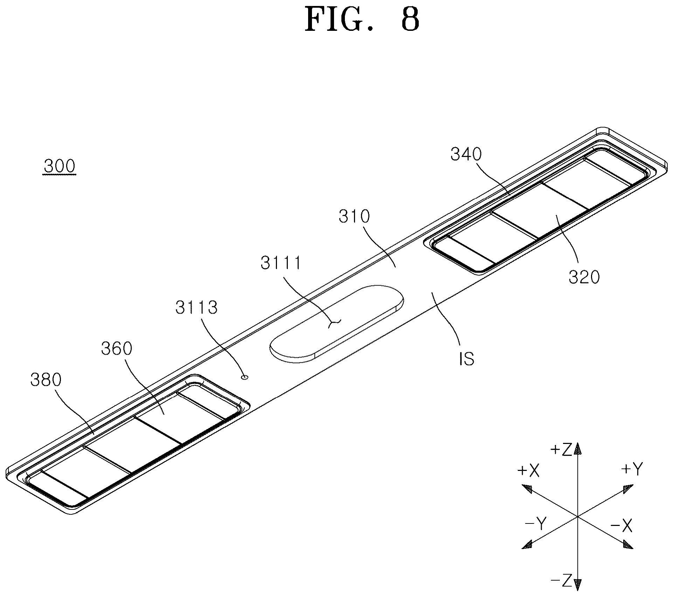

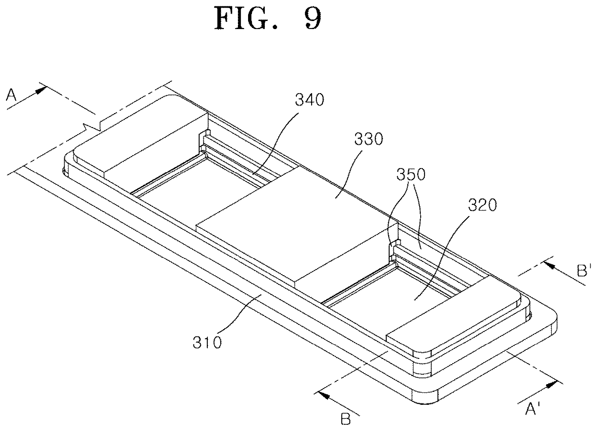

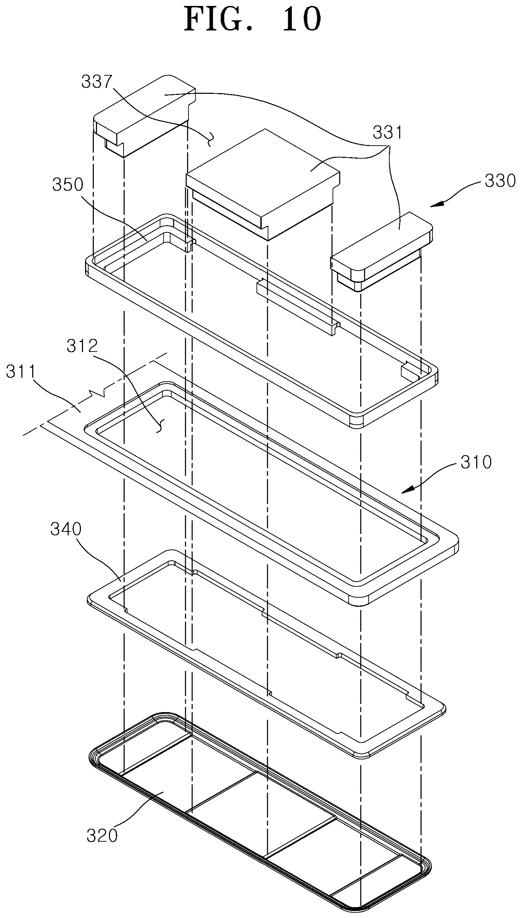

FIGS. 7 and 8 are perspective views schematically illustrating the cap plate assembly according to an embodiment of the present disclosure; FIG. 9 is an enlarged view of a portion of the cap plate assembly according to an embodiment of the present disclosure where the first connection member and the first terminal are disposed; and FIG. 10 is an exploded perspective view of a main portion of FIG. 9.

Referring to FIGS. 7 to 10, the cap plate assembly 300 according to an embodiment of the present disclosure includes a cap plate 310, the first connection member 320, and a first terminal 330. The cap plate assembly 300 may further include a first sealing member 340 and a first insulating member 350.

The cap plate 310 may have an overall flat plate shape. Referring to FIG. 3, the cap plate 310 may be disposed in the opening 160 of the case 100. The cap plate 310 may be disposed to face the bottom portion 110 of the case 100 in the first direction. That is, the cap plate 310 may be disposed at a position spaced a certain distance apart from the bottom portion 110 in the first direction. The cap plate 310 and the bottom portion 110 may be disposed parallel to each other.

The cap plate 310 may be seated on an upper end portion of the case 100 and, in an embodiment, on upper end portions of the front portion 120, the rear portion 130, the first side portion 140, and the second side portion 150. The cap plate assembly 300 may be coupled to the case 100 by any of various types of coupling methods, such as any of welding, bolting, fitting, and the like.

The insulating plate 400 may be disposed between the cap plate 310 and the electrode assembly 200 according to an embodiment of the present disclosure. The insulating plate 400 may prevent or substantially prevent direct contact between the cap plate 310 and the electrode assembly 200 to insulate the cap plate 310 and the electrode assembly 200. The insulating plate 400 may fix a position of the electrode assembly 200 in the case 100. The insulating plate 400 may prevent or substantially prevent the electrode assembly 200 from being damaged if the cap plate 310 is deformed inward from the case 100 due to an external impact or the like.

The insulating plate 400 according to an embodiment of the present disclosure may be disposed to face the electrode assembly 200 in the case 100 in the first direction. That is, the electrode assembly 200, the insulating plate 400, and the cap plate assembly 300 may be sequentially disposed in the first direction. The insulating plate 400 may be fixed to the case 100 by any of various types of coupling methods, such as any of fitting, welding, bolting, adhesion, and the like. The insulating plate 400 may be formed of an insulating material, such as polyethylene (PE), polypropylene (PP), polyethylene terephthalate (PET), rubber, or the like.

A first terminal hole 312 may be formed to pass through the cap plate 310. The first connection member 320 and the first terminal 330 may be installed in the first terminal hole 312. The first connection member 320 may be installed on an inner side surface IS of the cap plate 310, and the first terminal 330 may be installed on an outer side surface OS of the cap plate 310. The first connection member 320 and the first terminal 330 may be in contact with each other through the first terminal hole 312.

In the description of the present disclosure, the inner side surface IS refers to a surface facing an internal space surrounded by the case 100. In the description of the present disclosure, the outer side surface OS refers to a surface facing an external space exposed to the outside while assembled with the case 100, or a surface facing an opposite side of the inner side surface IS.

The first connection member 320 may have an overall flat plate shape and may be installed on the inner side surface IS of the cap plate 310. An outer side surface of the first connection member 320 may be in contact with the cap plate 310 and the first terminal 330. An inner side surface of the first connection member 320 may be in contact with the first tab member 240 and electrically connected to the first electrode 210. The first connection member 320 may provide an electrical connection between the first terminal 330 and the first tab member 240. The first connection member 320 may be formed of a conductive material, such as copper, aluminum, nickel, or the like.

The first terminal 330 may have a form of a flat plate or block and may be installed on the outer side surface OS of the cap plate 310. The first terminal 330 may be in contact with the first connection member 320 through the first terminal hole 312 formed in the cap plate 310. The first terminal 330 may provide an electrical connection between the bus bar 3 or an external power device and the first electrode 210 of the secondary battery 2.

The first terminal 330 according to an embodiment of the present disclosure may be formed of an electrically conductive material, such as aluminum, nickel, copper, or the like. The first terminal 330 may protrude outward from the cap plate 310. In an example, the first terminal 330 may be disposed on the outer side surface OS of the cap plate 310 facing the space outside the case 100.

A surface of the first terminal 330 may be disposed to face the first terminal hole 312. A surface of the first terminal 330 may be disposed to face the first connection member 320 through the first terminal hole 312. Although the drawings illustrate that the first terminal hole 312 has a rectangular shape and the first terminal 330 has an overall rectangular cross-sectional shape corresponding to the first terminal hole 312, the overall shape of the first terminal 330 is not limited thereto and may have any of various shapes, such as any of a circular shape, an oval shape, a polygonal shape, and the like.

The first terminal 330 may be electrically connected to the first electrode 210 by the first connection member 320 as described below. Accordingly, the first terminal 330 may function as a positive electrode terminal of the secondary battery 2. The bus bar 3 may be seated on an upper surface of the first terminal 330. In an embodiment, the bus bar 3 and the first terminal 330 may be integrally joined by laser welding or the like.

The first sealing member 340 may be disposed between the cap plate 310 and the first connection member 320. The first sealing member 340 may prevent or substantially prevent an electrolyte from leaking out of the case 100. The first sealing member 340 may be disposed between the cap plate 310 and the first connection member 320 to prevent or substantially prevent the electrolyte in the case 100 from leaking out between the inner side surface IS of the cap plate 310 and an outer side surface OS of the first sealing member 340.

The first sealing member 340 may electrically insulate the cap plate 310 and the first connection member 320 from each other. The first sealing member 340 according to an embodiment may be formed of an insulating material, such as polyethylene (PE), polypropylene (PP), polyethylene terephthalate (PET), rubber, or the like. The first sealing member 340 may be disposed to surround an edge portion of the first connection member 320 facing the cap plate 310.

The first insulating member 350 may be disposed between the cap plate 310 and the first terminal 330. The first insulating member 350 may electrically insulate the cap plate 310 and the first terminal 330 from each other. The first insulating member 350 according to an embodiment may be formed of an insulating material, such as polyethylene (PE), polypropylene (PP), polyethylene terephthalate (PET), rubber, or the like. The first insulating member 350 may be disposed to surround an edge portion of the first terminal 330 facing the cap plate 310.

The first sealing member 340 and the first insulating member 350 according to the present disclosure are not limited to specific structures and shapes as long as the first sealing member 340 and the first insulating member 350 can insulate between the cap plate 310 and the first connection member 320, and between the cap plate 310 and the first terminal 330. Although the drawings of the present disclosure illustrate a structure in which the first sealing member 340 and the first insulating member 350 are separately manufactured and assembled to the inner side surface IS and the outer side surface OS of the cap plate 310, respectively, the structures of the first sealing member 340 and the first insulating member 350 are not limited thereto.

In an embodiment, the first sealing member 340 and the first insulating member 350 may be integrally interconnected to have a structure forming a single piece and fitted into an edge portion of the first terminal hole 312. In an embodiment, at least one side of the first sealing member 340 and the first insulating member 350 may be manufactured while being integrally joined to the cap plate 310 by insert injection molding or the like.

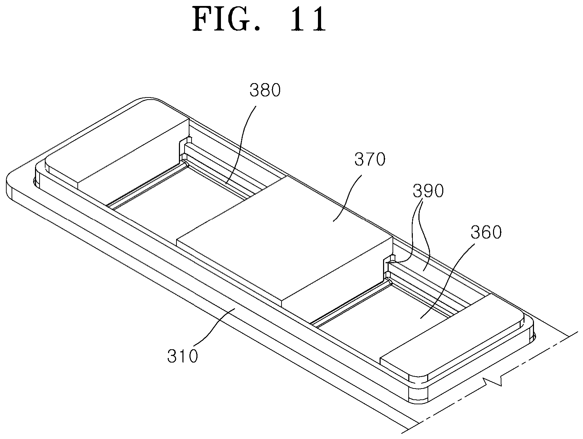

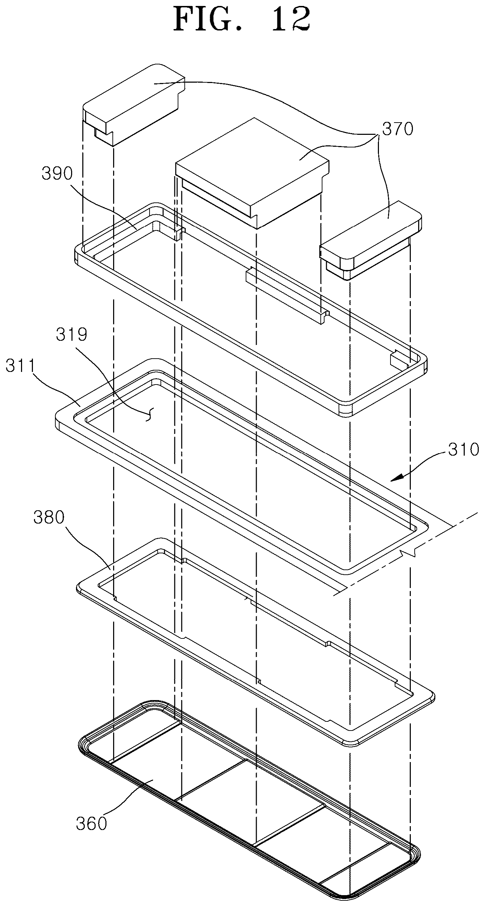

FIG. 11 is an enlarged view of a portion of the cap plate assembly according to an embodiment of the present disclosure where the second connection member and the second terminal are disposed; and FIG. 12 is an exploded perspective view of a main portion in FIG. 11.

Referring to FIGS. 11 and 12, the cap plate assembly 300 according to an embodiment of the present disclosure may further include a second connection member 360, a second terminal 370, a second sealing member 380, and a second insulating member 390.

A second terminal hole 319 may be further formed in the cap plate 310. The first terminal hole 312 and the second terminal hole 319 may be spaced apart from each other in the second direction. The second terminal hole 319 may be disposed to be spaced a certain distance apart from the first terminal hole 312 in the second direction. The first terminal hole 312 and the second terminal hole 319 may be sequentially disposed in the second direction.

The second connection member 360 and the second terminal 370 may be installed in the second terminal hole 319. The second connection member 360 may be installed on the inner side surface IS of the cap plate 310, and the second terminal 370 may be installed on the outer side surface OS of the cap plate 310. The second connection member 360 and the second terminal 370 may be in contact with each other through the second terminal hole 319.

The second connection member 360 may have an overall flat plate shape and may be installed on the inner side surface IS of the cap plate 310. An outer side surface of the second connection member 360 may be in contact with the cap plate 310 and the second terminal 370. An inner side surface of the second connection member 360 may be in contact with the second tab member 250 and may be electrically connected to the second electrode 220. The second connection member 360 may provide an electrical connection between the second terminal 370 and the second tab member 250. The second connection member 360 may be formed of a conductive material, such as copper, aluminum, nickel, or the like.

The second terminal 370 may have the form of a flat plate or block and may be installed on the outer side surface OS of the cap plate 310. The second terminal 370 may be in contact with the second connection member 360 through the second terminal hole 319 formed in the cap plate 310. The second terminal 370 may provide an electrical connection between the bus bar 3 or an external power device and the second electrode 220 of the secondary battery 2.

The second terminal 370 according to an embodiment may be formed of an electrically conductive material, such as aluminum, nickel, copper, or the like. The second terminal 370 may protrude outward from the cap plate 310. In an example, the second terminal 370 may be disposed on the outer side surface OS of the cap plate 310 facing the space outside the case 100.

A surface of the second terminal 370 may be disposed to face the second terminal hole 319. A surface of the second terminal 370 may be disposed to face the second connection member 360 through the second terminal hole 319. Although the drawings illustrate that the second terminal hole 319 has a rectangular shape and the second terminal 370 has an overall rectangular cross-sectional shape corresponding to the second terminal hole 319, the overall shape of the second terminal 370 is not limited thereto and may have any of various shapes, such as any of a circular shape, an oval shape, a polygonal shape, and the like.

The second terminal 370 may be electrically connected to the second electrode 220 by the second connection member 360 as described below. Accordingly, the second terminal 370 may function as a negative electrode terminal of the secondary battery 2. The bus bar 3 may be seated on an upper surface of the second terminal 370. In an embodiment, the bus bar 3 and the second terminal 370 may be integrally joined by laser welding or the like.

The first terminal 330 and the second terminal 370 may be spaced apart from each other in the second direction on the cap plate 310. In an example, the second terminal 370 may be disposed at a position spaced a certain distance apart from the first terminal 330 in the second direction.

The second sealing member 380 may be disposed between the cap plate 310 and the second connection member 360. The second sealing member 380 may electrically insulate the cap plate 310 and the second connection member 360 from each other. The second sealing member 380 according to an embodiment may be formed of an insulating material, such as polyethylene (PE), polypropylene (PP), polyethylene terephthalate (PET), rubber, or the like. The second sealing member 380 may be disposed to surround an edge portion of the second connection member 360 facing the cap plate 310. A lower end portion of the second sealing member 380 may be located above the internal space of the case 100 through the second terminal hole 319.

The second insulating member 390 may be disposed between the cap plate 310 and the second terminal 370. The second insulating member 390 may electrically insulate the cap plate 310 and the second terminal 370 from each other. The second insulating member 390 according to an embodiment may be formed of an insulating material, such as polyethylene (PE), polypropylene (PP), polyethylene terephthalate (PET), rubber, or the like. The second insulating member 390 may be disposed to surround an edge portion of the second terminal 370 facing the cap plate 310.

The second sealing member 380 and the second insulating member 390 according to the present disclosure are not limited to specific structures and shapes as long as the second sealing member 380 and the second insulating member 390 can insulate between the cap plate 310 and the second connection member 360 and between the cap plate 310 and the second terminal 370. Although the drawings of the present disclosure illustrate a structure in which the second sealing member 380 and the second insulating member 390 are separately manufactured and assembled to the inner side surface IS and the outer side surface OS of the cap plate 310, respectively, the structures of the second sealing member 380 and the second insulating member 390 are not limited thereto.

In an embodiment, the second sealing member 380 and the second insulating member 390 may be integrally interconnected to have a structure forming a single piece and fitted into an edge portion of the second terminal hole 319. In an embodiment, at least one side of the second sealing member 380 and the second insulating member 390 may be manufactured while being integrally joined to the cap plate 310 by insert injection molding or the like.

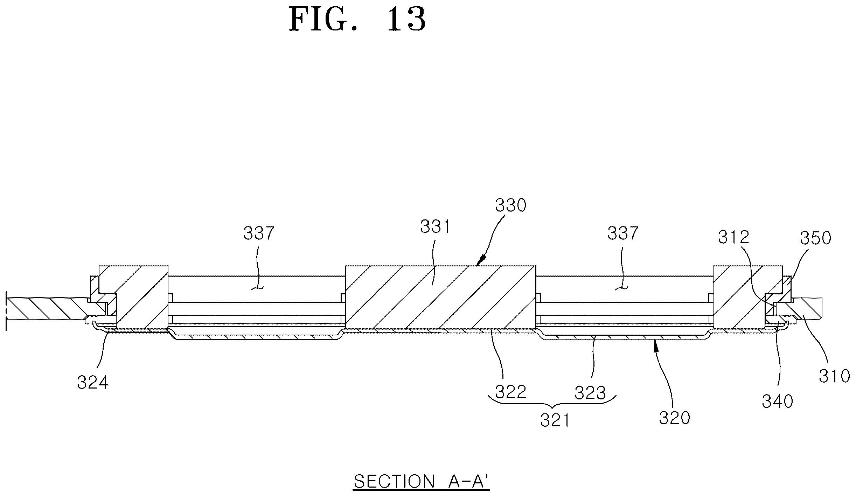

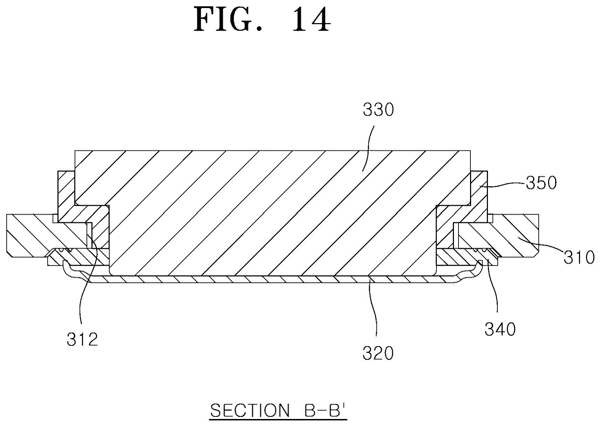

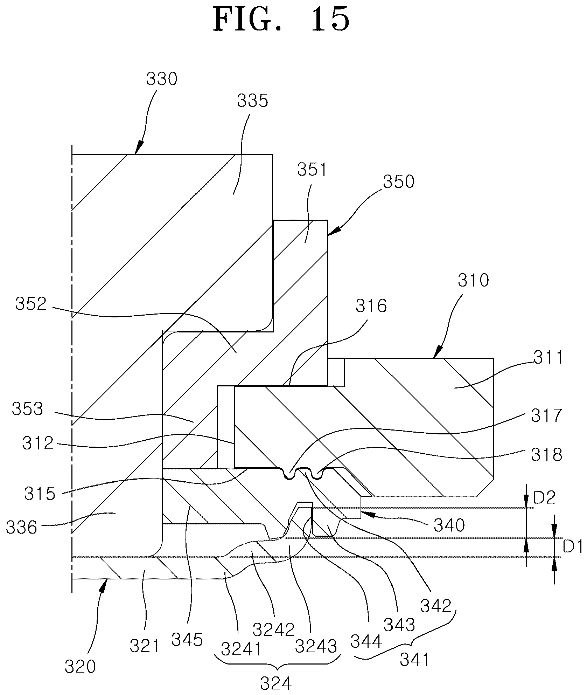

FIG. 13 is a cross-sectional view taken along the line A-A' in FIG. 9; FIG. 14 is a cross-sectional view taken along the line B-B' in FIG. 9; and FIG. 15 is an enlarged partial view of FIG. 14.

Referring to FIGS. 13 to 15, the first connection member 320 and the first terminal 330 may be in contact with each other with the cap plate 310 therebetween. Contact portions between the first connection member 320 and the first terminal 330 may be joined to each other. The first connection member 320 and the first terminal 330 may be joined to each other with the cap plate 310 therebetween and, in an embodiment, may be integrally bonded with the cap plate 310.

In an embodiment, the first connection member 320 and the first terminal 330 may be made of different materials and may be joined to each other by ultrasonic fusion. In an embodiment, for example, the first connection member 320 may be made of a material primarily composed of copper (Cu), the first terminal 330 may be made of a material primarily composed of aluminum (Al), and the first connection member 320 and the first terminal 330 may be welded to each other by ultrasonic fusion.

The first sealing member 340 may be disposed between the cap plate 310 and the first connection member 320, and the first insulating member 350 may be disposed between the cap plate 310 and the first terminal 330. The first terminal 330 and the first connection member 320 may be joined to each other with the cap plate 310, the first sealing member 340, and the first insulating member 350 therebetween, and, in an embodiment, may be integrally bonded with the cap plate 310, the first sealing member 340, and the first insulating member 350.

In this case, the first sealing member 340 may be brought into close contact with the inner side surface IS of the cap plate 310 due to the joining strength between the first connection member 320 and the first terminal 330. The first insulating member 350 may be brought into close contact with the outer side surface OS of the cap plate 310 by the joining strength between the first connection member 320 and the first terminal 330. The first sealing member 340 and the first insulating member 350 may be brought into close contact with each other by the joining strength between the first connection member 320 and the first terminal 330.

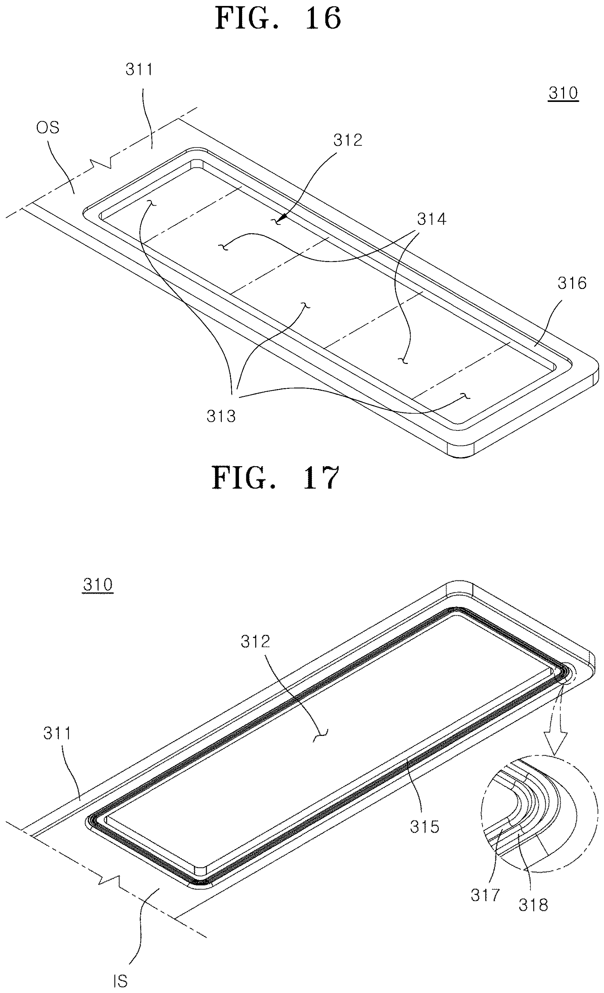

FIGS. 16 and 17 are perspective views schematically illustrating a main portion of the cap plate according to an embodiment of the present disclosure.

Referring to FIGS. 16 and 17, the cap plate 310 according to an embodiment of the present disclosure may include a cap plate main body 311, the first terminal hole 312, a first assembly groove 315, a second assembly groove 316, a first protrusion 317, a second protrusion 318, and the second terminal hole 319.

The cap plate main body 311 may be a component forming a general framework of the cap plate 310 and may have an overall flat plate shape. The cap plate main body 311 may have a shape corresponding to the opening 160 of the case 100 and may be disposed to cover the opening 160. An edge portion of the cap plate main body 311 may be in contact with an edge portion of the case 100 and may be coupled to the case 100 to seal the inside of the case 100. The cap plate main body 311 may be coupled to the case 100 by any of various types of coupling methods, such as any of welding, bolting, fitting, and the like.

The first terminal hole 312 may be formed to pass through the cap plate main body 311. The cap plate main body 311 may have a flat plate shape having widths in the second and third directions, and the first terminal hole 312 may be formed to pass through the cap plate main body 311 in the first direction.

The first connection member 320 may be installed in the first terminal hole 312 on the inner side surface IS of the cap plate main body 311, and the first terminal 330 may be installed in the first terminal hole 312 on the outer side surface OS of the cap plate main body 311. The first connection member 320 and the first terminal 330 may be in contact with each other through the first terminal hole 312.

The first terminal hole 312 according to an embodiment of the present disclosure may include a first terminal joining hole 313 and a first tab joining hole 314.

The first terminal joining hole 313 is a portion where the first terminal 330 is installed, and one or more first terminal joining holes 313 may be defined. The first terminal 330 may be disposed to cover or pass through a portion of the first terminal hole 312. In an embodiment, the first terminal 330 may be formed as a single member and may also have a structure divided into a plurality of first terminal blocks 331. When the first terminal 330 has the structure divided into the plurality of first terminal blocks 331, the first terminal joining hole 313 may be formed at a position corresponding to each of the plurality of first terminal blocks 331. A plurality of first terminal joining holes 313 may be disposed spaced apart from each other.

The first tab joining hole 314 is a portion where the first terminal 330 is not installed, and one or more first tab joining holes 314 may be defined. The first connection member 320 may be exposed to the outside of the cap plate 310 through the first tab joining hole 314. Energy for joining the first connection member 320 to the first tab member 240 may pass through the first tab joining hole 314 and reach the first connection member 320 from the outside of the cap plate assembly 300.

In an embodiment, the first tab joining hole 314 may be continuously formed with the first terminal joining hole 313. In an embodiment, there is a first terminal joining hole 313, and one or more first tab joining holes 314 may be provided and disposed adjacent to the first terminal joining hole 313. The first tab joining hole 314 may be located between a plurality of first terminal joining holes 313, and may be alternately disposed with the plurality of first terminal joining holes 313. In an embodiment, there are two first terminal joining holes 313, and the first tab joining hole 314 may be located between the two first terminal joining holes 313. In an embodiment, there are three or more first terminal joining holes 313, a plurality of first tab joining holes 314 may be formed, and the plurality of first tab joining holes 314 may be alternately disposed with the plurality of first terminal joining holes 313.

One or more first terminal joining holes 313 and first tab joining holes 314 may be alternately disposed in an extending direction of the first connection member 320. The first connection member 320 may extend in the second direction, and one or more first terminal joining holes 313 and first tab joining holes 314 may be alternately disposed in the second direction.

The first assembly groove 315 is a portion where the first sealing member 340 is seated and assembled to the cap plate main body 311, and may be formed to be recessed on the inner side surface IS of the cap plate main body 311. The first assembly groove 315 may be formed to extend along an edge portion of the first terminal hole 312. In an embodiment, the first terminal hole 312 has an overall rectangular shape, and the first assembly groove 315 may be formed in a rectangular ring shape along the edge portion of the first terminal hole 312.

The first assembly groove 315 may have a shape corresponding to the first sealing member 340, and the first sealing member 340 may be fitted into and assembled to the first assembly groove 315. A corner may be formed at a boundary portion between an outer edge portion of the first assembly groove 315 and the inner side surface IS of the cap plate main body 311. In an embodiment, an inner edge portion of the first assembly groove 315 may be continuous with the first terminal hole 312.

While the first sealing member 340 is seated on the first assembly groove 315, an outer edge portion of the first sealing member 340 may be in contact with the outer edge portion of the first assembly groove 315 and may be exposed to the inner side surface IS of the cap plate main body 311. The first assembly groove 315 may be formed to be recessed in the first direction on the cap plate main body 311, and the first sealing member 340 may be caught or restrained on an outer edge portion of the first assembly groove 315 and thus may be restricted from moving in the second and third directions. The outer edge portion of the first assembly groove 315 may function as a wall or stopper which restricts movement of the first sealing member 340.

The second assembly groove 316 is a portion where the first insulating member 350 is seated and assembled to the cap plate main body 311, and may be formed to be recessed on the outer side surface OS of the cap plate main body 311. The second assembly groove 316 may be formed to extend along the edge portion of the first terminal hole 312. In an embodiment, the first terminal hole 312 has an overall rectangular shape, and the second assembly groove 316 may be formed in a rectangular ring shape along the edge portion of the first terminal hole 312.

The second assembly groove 316 may have a shape corresponding to the first insulating member 350, and the first insulating member 350 may be fitted into and assembled to the second assembly groove 316. A corner may be formed at a boundary portion between an outer edge portion of the second assembly groove 316 and the outer side surface OS of the cap plate main body 311. In an embodiment, an inner edge portion of the second assembly groove 316 may be continuous with the first terminal hole 312.

While the first insulating member 350 is seated on the second assembly groove 316, an outer edge portion of the first insulating member 350 may be in contact with the outer edge portion of the second assembly groove 316 and may be exposed to the outer side surface OS of the cap plate main body 311. The second assembly groove 316 may be formed to be recessed in a direction opposite to the first direction, and the first insulating member 350 may be caught or restrained on the outer edge portion of the second assembly groove 316 and thus may be restricted from moving in the second and third directions.

An inner edge portion of the first sealing member 340 may be exposed or may protrude on the first terminal hole 312. An inner edge portion of the first insulating member 350 may be exposed or may protrude on the first terminal hole 312. The inner edge portion of the first sealing member 340 and the inner edge portion of the first insulating member 350 may face each other while being in contact with each other in the first direction on the first terminal hole 312.

The first protrusion 317 may be formed to protrude from the first assembly groove 315 and may be in contact with the first sealing member 340. In an embodiment, the first protrusion 317 may be formed to continuously extend linearly along the first assembly groove 315. The first sealing member 340 may be in close linear contact with the first protrusion 317 while being in surface contact with the first assembly groove 315.

The second protrusion 318 may be formed to protrude from the first assembly groove 315 and may be in contact with the first sealing member 340 at a position spaced apart from the first protrusion 317. In an embodiment, the second protrusion 318 may be formed to continuously extend linearly along the first assembly groove 315, and may be disposed parallel to the first protrusion 317 with an interval therebetween.

The first sealing member 340 may be in close linear contact with the first protrusion 317 and the second protrusion 318 while being in surface contact with the first assembly groove 315. The first sealing member 340 may make multiple linear contact with the cap plate 310 through the first protrusion 317 and the second protrusion 318. The first protrusion 317 and the second protrusion 318 may be pressed and brought into contact with the first sealing member 340. Accordingly, a space between the outer side surface OS of the first sealing member 340 and the first assembly groove 315 may be firmly sealed, and the electrolyte in the case 100 may be prevented or substantially prevented from leaking out between the inner side surface IS of the cap plate 310 and the outer side surface OS of the first sealing member 340.

The second terminal hole 319 may be formed to pass through the cap plate main body 311. The cap plate main body 311 may have a flat plate shape having widths in the second and third directions, and the second terminal hole 319 may be formed to pass through the cap plate main body 311 in the first direction. The second terminal hole 319 may be disposed to be spaced a certain distance apart from the first terminal hole 312 in the second direction.

The second connection member 360 may be installed in the second terminal hole 319 on the inner side surface IS of the cap plate main body 311, and the second terminal 370 may be installed in the second terminal hole 319 on the outer side surface OS of the cap plate main body 311. The first connection member 320 and the second terminal 370 may be in contact with each other through the second terminal hole 319.

The second terminal hole 319 according to an embodiment of the present disclosure may have a structure that is the same as or corresponding to that of the first terminal hole 312. The second terminal hole 319 may have a structure the same as or corresponding to the first terminal hole 312 including the first terminal joining hole 313 and the first tab joining hole 314. Further, components the same as or corresponding to the first assembly groove 315, the second assembly groove 316, the first protrusion 317, and the second protrusion 318 may be formed on an edge portion of the second terminal hole 319.

Accordingly, further description of the structure and function of the second terminal hole 319 will be omitted and may be replaced with the detailed description of the first terminal hole 312. Further, the description of structures and functions of the first assembly groove 315, the second assembly groove 316, the first protrusion 317, and the second protrusion 318 formed at the edge portion of the second terminal hole 319 will be omitted and may be replaced with the detailed description of the first assembly groove 315, the second assembly groove 316, the first protrusion 317, and the second protrusion 318 formed at the edge portion of the first terminal hole 312.

A vent hole 3111, a vent 3112, and an electrolyte inlet 3113 may be formed in the cap plate 310 according to an embodiment.

The vent hole 3111 according to an embodiment may be formed to have a form of a hole vertically passing through the cap plate 310 in the first direction. The vent hole 3111 may provide a path through which flames, gas, smoke, or the like formed in the case 100 may be discharged to the outside of the case 100 if thermal runaway of the secondary battery 2 occurs, such as due to an overcurrent or the like. A cross-sectional shape of the vent hole 3111 may have any of various shapes, such as any of an oval shape, a circular shape, a polygonal shape, and the like.

The vent 3112 may be installed in the vent hole 3111 and opened and closed in response to a change in internal pressure of the case 100. That is, the vent 3112 may prevent or substantially prevent an electrolyte and the like in the case 100 from leaking out of the case 100 or moisture, foreign substances, and the like from entering the case 100 by closing the vent hole 3111 when the secondary battery 2 normally operates. The vent 3112 may guide flames, gas, smoke, or the like formed in the case 100 to be discharged to the outside of the case 100 by opening the vent hole 3111 if thermal runaway of the secondary battery 2 occurs.

The vent 3112 according to an embodiment may be formed to have a generally plate shape. The vent 3112 may be fixed to the cap plate 310 by any of various types of coupling methods, such as any of welding, bolting, fitting, and the like. The vent 3112 may be disposed in the vent hole 3111, or disposed to face the vent hole 3111 at an upper or lower side of the cap plate 310 in the first direction.

In an embodiment, a thickness of the vent 3112 parallel to the first direction may be smaller than a thickness of the cap plate 310. Accordingly, the vent 3112 may easily rupture or break if the internal pressure of the case 100 increases. In an embodiment, the vent 3112 may include a notch formed concavely inward from the vent 3112 to preferentially rupture if the internal pressure of the case 100 increases.

The electrolyte may be injected into the case 100 through the electrolyte inlet 3113. The electrolyte inlet 3113 may be formed to pass through the cap plate 310, and a sealing stopper may be installed. The electrolyte inlet 3113 may be disposed to be spaced a certain interval apart from the vent hole 3111 in the second direction or in the direction opposite to the second direction.

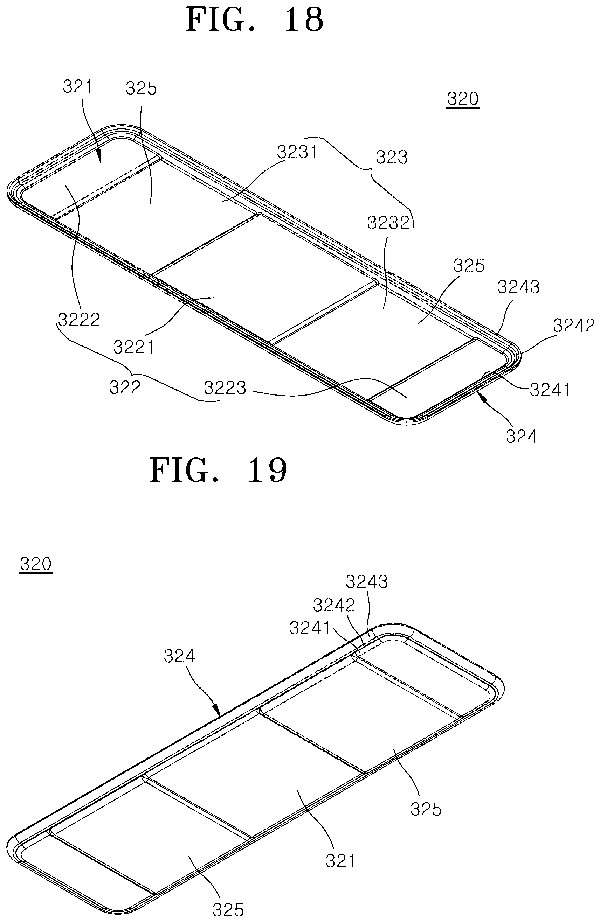

FIGS. 18 and 19 are perspective views schematically illustrating a main portion of the first connection member according to an embodiment of the present disclosure.

Referring to FIGS. 18 and 19, the first connection member 320 according to an embodiment of the present disclosure may include a first connection main body 321, a first support 324, and a first groove 325.

The first connection main body 321 is a portion forming a general framework of the first connection member 320, and may have an overall flat plate shape and may be disposed on the inner side surface IS of the cap plate 310. The first connection main body 321 may have a shape and a width corresponding to the first terminal hole 312. The first connection main body 321 may face the first terminal hole 312 on the inner side surface IS of the cap plate 310 and may be in contact with the first tab member 240.

The first connection main body 321 may be disposed between the first terminal 330 and the electrode assembly 200. The first connection main body 321 may have a flat plate shape disposed perpendicular to the first direction. The first connection main body 321 may be in contact with the first terminal 330 on the inner side surface IS of the cap plate 310 and electrically connected to the first terminal 330. In an embodiment, the first connection main body 321 and the first terminal 330 may be integrally joined by ultrasonic fusion or the like.

An inner side surface of the first connection main body 321 may be disposed to face the first inner tab member 241 and the first outer tab member 242. An outer side surface of the first connection main body 321 may be disposed to face an inner side surface of the first terminal 330 disposed to face the internal space of the case 100.

The first connection main body 321 according to an embodiment of the present disclosure may include a first terminal connection plate 322 and a first tab connection plate 323.

The first terminal connection plate 322 is a portion of the first connection main body 321 which is in contact with the first terminal 330, and may have a width and shape corresponding to the first terminal 330. At least a portion of the first terminal connection plate 322 may be welded to the first terminal 330. An outer side surface of the first terminal connection plate 322 may be in contact with an inner side surface of the first terminal 330, and may be covered by the first terminal 330. The first terminal connection plate 322 may have a width and shape corresponding to the inner side surface of the first terminal 330.

The first terminal 330 may be formed as a single member and may also have a structure divided into a plurality of first terminal blocks 331. In an embodiment, the first terminal 330 has the structure divided into the plurality of first terminal blocks 331, the first terminal connection plate 322 may be formed at a position corresponding to each of the plurality of first terminal blocks 331. A plurality of first terminal connection plates 322 may be disposed spaced apart from each other.

The first terminal connection plate 322 according to an embodiment of the present disclosure may include a first block connection portion 3221, a second block connection portion 3222, and a third block connection portion 3223.

The first block connection portion 3221 may be in contact with the first terminal 330 between a first inner tab connection portion 3231 and a first outer tab connection portion 3232 (to be described below). The second block connection portion 3222 may be disposed spaced apart from the first block connection portion 3221 with the first inner tab connection portion 3231 therebetween. The third block connection portion 3223 may be disposed spaced apart from the first block connection portion 3221 with the first outer tab connection portion 3232 therebetween.

The third block connection portion 3223, the first block connection portion 3221, and the second block connection portion 3222 may be disposed sequentially in the second direction on the first terminal hole 312. The first block connection portion 3221, the second block connection portion 3222, and the third block connection portion 3223 may respectively be in contact with the plurality of first terminal blocks 331 at positions spaced apart from each other. The first block connection portion 3221, the second block connection portion 3222, and the third block connection portion 3223 may be welded to the plurality of first terminal blocks 331.

The first tab connection plate 323 is a portion of the first connection main body 321 which is in contact with the first tab member 240, and may have a width and shape corresponding to the first tab member 240. At least a portion of the first tab connection plate 323 may be welded to the first tab member 240. An outer side surface of the first tab connection plate 323 may be exposed to the outside of the cap plate 310 through the first terminal hole 312, and an inner side surface of the first tab connection plate 323 may face the first tab member 240.

In an embodiment, there is one first terminal connection plate 322, and one or more first tab connection plates 323 may be provided and disposed adjacent to the first terminal connection plate 322. The first tab connection plate 323 may be located between a plurality of first terminal connection plates 322 disposed spaced apart from each other, and may be alternately disposed with the plurality of first terminal connection plates 322. In an embodiment, there are two first terminal connection plates 322, and the first tab connection plate 323 may be located between the two first terminal connection plates 322. In an embodiment, there are three first terminal connection plates 322, a plurality of first tab connection plates 323 may be formed, and the plurality of first tab connection plates 323 may be alternately disposed with the plurality of first terminal connection plates 322.

One or more first terminal connection plates 322 and first tab connection plates 323 may be alternately disposed in the extending direction of the first connection member 320. The first connection member 320 may extend in the second direction, and one or more first terminal connection plates 322 and first tab connection plates 323 may be alternately disposed in the second direction.

The first tab connection plate 323 according to an embodiment of the present disclosure may include the first inner tab connection portion 3231 and the first outer tab connection portion 3232.

The first inner tab connection portion 3231 may be in contact with the first inner tab member 241. An inner side surface of the first inner tab connection portion 3231 may be located in the first direction of the first inner tab member 241 and may face the first inner tab member 241. The first outer tab connection portion 3232 may be in contact with the first outer tab member 242. An inner side surface IS of the first outer tab connection portion 3232 may be located in the first direction of the first outer tab member 242.

The first outer tab connection portion 3232 may be disposed spaced apart from the first inner tab connection portion 3231. The first outer tab member 242 may be spaced by an interval (e.g., a set interval) apart from the first inner tab member 241 in the direction opposite to the second direction, and, correspondingly, the first outer tab connection portion 3232 may be spaced by an interval (e.g., a set interval) apart from the first inner tab connection portion 3231 in the direction opposite to the second direction.

The first inner tab connection portion 3231 and the first outer tab connection portion 3232 may be disposed spaced apart in the second direction with the first block connection portion 3221 therebetween and may be in contact with the first inner tab member 241 and the first outer tab member 242, respectively. The inner side surfaces IS of the first inner tab connection portion 3231 and the first outer tab connection portion 3232 may be welded to the first inner tab member 241 and the first outer tab member 242, respectively, by joining energy (for example, a laser L or the like) which reaches from the outer side surface.

In an embodiment, the first support 324 may be integrally formed at an edge portion of the first connection main body 321 and may face the inner side surface IS of the cap plate 310. The first support 324 may have a shape and a width corresponding to an edge portion of the first terminal hole 312. In an embodiment, the first support 324 may be formed to extend continuously in a band shape along the edge portion of the first connection main body 321. The first support 324 may be located at edge portions of the first connection main body 321 in the second direction, the direction opposite to the second direction, the third direction, and a direction opposite to the third direction.

The first support 324 may face the first assembly groove 315 at the edge portion of the first terminal hole 312 and may be in contact with an inner side surface of the first sealing member 340 fitted into the first assembly groove 315. In an embodiment, the first support 324 may have a shape curved toward the cap plate 310 from the first connection main body 321 having an overall flat plate shape.

The first connection member 320, the first sealing member 340, and the cap plate 310 may be sequentially disposed in the first direction, and the first support 324 may have a shape that is curved and protrudes from the first connection main body 321 in the first direction by a protruding width (e.g., a set protruding width). In an embodiment, the first support 324 may be formed to be curved in the first direction different from the extending directions (the second and third directions) of the first connection main body 321.

Thus, in an embodiment, as the first support 324 is formed in a curved shape at the edge portion of the first connection main body 321, flexural rigidity of the first connection member 320 may be enhanced. As the first support 324 is formed to be curved in the first direction with respect to the first connection main body 321, the first support 324 may be brought into close linear contact with the first sealing member 340 in the first direction. Accordingly, the electrolyte in the case 100 may be prevented or substantially prevented from leaking out between an outer side surface of the first connection member 320 and an inner side surface of the first sealing member 340.

A space between the outer side surface of the first sealing member 340 and the first assembly groove 315 may be firmly sealed, and the electrolyte in the case 100 may be prevented or substantially prevented from leaking out between the inner side surface IS of the cap plate 310 and the outer side surfaces OS of the first connection member 320 and the first sealing member 340.

The first support 324 according to an embodiment of the present disclosure may include a first bent portion 3241, a second bent portion 3242, and a third bent portion 3243.

The first bent portion 3241 may have a shape bent from an edge of the first connection main body 321 in the first direction. The second bent portion 3242 may be connected to the first bent portion 3241 and may have a shape bent in a direction different from the first direction. The second bent portion 3242 may be bent in different directions depending on a position thereof, and may be bent in the second direction, the direction opposite to the second direction, the third direction, and the direction opposite to the third direction. The third bent portion 3243 may be connected to the second bent portion 3242 and may have a shape bent in the first direction.

The first bent portion 3241 may have a first protruding width D1 in the first direction and the third bent portion 3243 may have a second protruding width D2 in the first direction. The first support 324 may be formed to have a protruding width (e.g., a set protruding width) in the first direction from the first connection main body 321, and thus may have a shape protruding from the first connection main body 321 by a sum of the first protruding width D1 and the second protruding width D2.

In an embodiment, the first bent portion 3241, the second bent portion 3242, and the third bent portion 3243 may be disposed sequentially and continuously from the edge of the first connection main body 321. The first support 324 may have a multi-bent shape due to the first bent portion 3241, the second bent portion 3242, and the third bent portion 3243. As the first support 324 has the multi-bent shape in the first direction, the first support 324 may be deformed flexibly and elastically according to a load while maintaining close elastic contact with the first sealing member 340 in the first direction.

If a load is applied to the first connection main body 321 in the first direction, the curved shape of the first support 324 may be elastically varied. For example, relative positions of the first bent portion 3241 and the third bent portion 3243 in the first direction may be varied. Accordingly, due to a load applied when the first connection member 320 and the first terminal 330 are ultrasonically fused, the first support 324 may be plastically deformed to prevent or substantially prevent a contact pressure with the first sealing member 340 from being loosened or a gap from being generated between the first sealing member 340 and the first support 324.

The first groove 325 may be formed concavely toward the first tab member 240 on the first tab connection plate 323 which is in contact with the first tab member 240. The first groove 325 may have a form of a groove in part or all of the first tab connection plate 323, and one or more first grooves 325 may be formed. A plurality of first grooves 325 may be provided, and the plurality of first grooves 325 may be arranged at intervals (e.g., set intervals) in the second direction. The first groove 325 may have a form of a line extending in the second or third direction, and may be formed in a form of a plate or other figures.

In the drawings of the present disclosure, the first groove 325 is illustrated in the form of a plate corresponding to the first tab connection plate 323. The first tab connection plate 323 may include the first inner tab connection portion 3231 and the first outer tab connection portion 3232, and the first groove 325 may be formed in each of the first inner tab connection portion 3231 and the first outer tab connection portion 3232. The first groove 325 may have a form of a plate corresponding to the first inner tab connection portion 3231 and the first outer tab connection portion 3232.

In an embodiment, a plurality of weld lines (not illustrated) connected to the first tab member 240 may be formed on the first groove 325. In an embodiment, the weld lines may integrally connect the first tab member 240 and the first connection member 320 stacked in the first direction. The weld lines may be a mixture of the first connection member 320 and the first tab member 240 melted and cured by the heat generated during laser welding. The weld lines may be disposed on a bottom surface of the first groove 325.

As the first groove 325 is formed on the first tab connection plate 323, the first tab connection plate 323 may be located more adjacent and closer to the first tab member 240 than the first terminal connection plate 322. Accordingly, bonding between the first tab connection plate 323 and the first tab member 240 may be enhanced.

In an embodiment, as the first groove 325 is formed in a form corresponding to the first tab connection plate 323, a corner may be formed between the first tab connection plate 323 and the first terminal connection plate 322. Accordingly, a portion where the first terminal 330 is connected and assembled and a portion where the first tab member 240 is connected and assembled may be clearly distinguished. Positions, regions, and boundaries between the plurality of first tab connection plates 323 and first terminal connection plates 322, which are alternately and continuously disposed, may be clearly distinguished. Accordingly, assembly between the first terminal 330 and the first connection member 320 may be performed more easily.

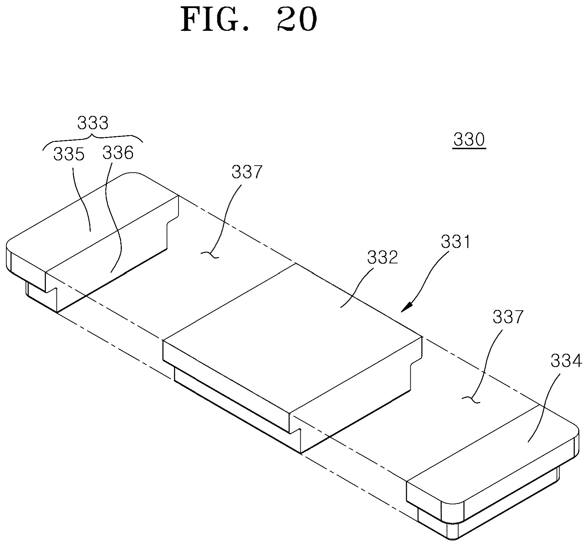

FIG. 20 is a perspective view schematically illustrating the first terminal according to an embodiment of the present disclosure.

Referring to FIG. 20, the first terminal 330 according to an embodiment of the present disclosure may include a first terminal block 331 and a first opening hole 337.

The first terminal block 331 may have a form of a three-dimensional block having a smaller width than the first terminal hole 312. The first terminal block 331 may be disposed at a position (e.g., a set position) on the first terminal hole 312 and may face the first connection member 320. A plurality of first terminal blocks 331 may be provided and disposed spaced apart from each other on the first terminal hole 312.

In an embodiment, a sum of widths of the plurality of first terminal blocks 331 may be smaller than a width of the first terminal hole 312. The sum of the widths of the plurality of first terminal blocks 331 in the second direction may be smaller than the width of the first terminal hole 312. Accordingly, the plurality of first terminal blocks 331 may be disposed spaced apart from each other in the second direction on the first terminal hole 312.

The first opening hole 337 may be formed to be open between one or more first terminal blocks 331. The first terminal 330 according to the present disclosure may have a structure in which only a portion of the first terminal hole 312 is covered by the first terminal block 331, and the first opening hole 337 is formed in another portion of the first terminal hole 312 instead of covering the entire first terminal hole 312 with the first terminal block 331.

The first opening hole 337 may be a hollow space formed between the plurality of first terminal blocks 331. Joining energy transferred between the plurality of first terminal blocks 331 may pass through the first opening hole 337 and directly reach the first connection member 320 and may bond the first connection member 320 to the first tab member 240.

The first terminal block 331 according to an embodiment of the present disclosure may include a first block piece 332, a second block piece 333, and a third block piece 334.

The first terminal 330 may be disposed on the first terminal hole 312, and thus may be disposed to be spaced apart and distributed at three positions corresponding to the first block piece 332, the second block piece 333, and the third block piece 334. Accordingly, the first terminal 330 may be stably in contact with the bus bar 3 and the first connection member 320 at the three positions corresponding to the first block piece 332, the second block piece 333, and the third block piece 334.

In an embodiment, the first block piece 332, the second block piece 333, and the third block piece 334 may have widths capable of covering the first terminal hole 312 in the third direction, and may have widths smaller than the first terminal hole 312 in the second direction. The third block piece 334, the first block piece 332, and the second block piece 333 may be sequentially disposed in the second direction on the first terminal hole 312.

The first block piece 332 may be disposed in a middle of the first terminal hole 312 in the second direction. The first block piece 332 may be in contact with the first block connection portion 3221 of the first connection member 320. The first block connection portion 3221 may be located between the first inner tab connection portion 3231 and the first outer tab connection portion 3232, and the first block piece 332 and the first block connection portion 3221 may be in contact with each other between the first inner tab connection portion 3231 and the first outer tab connection portion 3232.

The second block piece 333 may be disposed in the second direction of the first block piece 332 with an interval therebetween. The second block piece 333 may be disposed spaced apart from the first block piece 332 on the first terminal hole 312, and may form, or define, the first opening hole 337 between the first block piece 332 and the second block piece 333. The first opening hole 337 may be formed to be open in the first direction at a position corresponding to the first inner tab connection portion 3231.

The second block piece 333 may be disposed spaced apart from the first block piece 332 with the first inner tab connection portion 3231 therebetween. The second block piece 333 may be in contact with the second block connection portion 3222 of the first connection member 320. The second block connection portion 3222 may be disposed spaced apart from the first block connection portion 3221 with the first inner tab connection portion 3231 therebetween, and the second block piece 333 and the second block connection portion 3222 may be in contact with each other in the second direction of the first inner tab connection portion 3231.

The third block piece 334 may be disposed spaced apart from the first block piece 332 at an opposite side of the second block piece 333. The third block piece 334 may be disposed spaced apart from the first block piece 332 at the opposite side from the second block piece 333, and may form, or define, the first opening hole 337 between the first block piece 332 and the third block piece 334. The first opening hole 337 may be formed to be open in the first direction at a position corresponding to the first outer tab connection portion 3232.

The third block piece 334 may be disposed spaced apart from the first block piece 332 with the first outer tab connection portion 3232 therebetween. The third block piece 334 may be in contact with the third block connection portion 3223 of the first connection member 320. The third block piece 334 may be disposed spaced apart from the first block piece 332 with the first outer tab connection portion 3232 therebetween, and the third block piece 334 and the third block connection portion 3223 may be in contact with each other in the direction opposite to the second direction of the first outer tab connection portion 3232.

The first block piece 332, the second block piece 333, and the third block piece 334 may be in contact with the first block connection portion 3221, the second block connection portion 3222, and the third block connection portion 3223, respectively. In an embodiment, the first block piece 332, the second block piece 333, and the third block piece 334 may be welded to the first block connection portion 3221, the second block connection portion 3222, and the third block connection portion 3223, respectively.

The first terminal block 331 according to an embodiment of the present disclosure may include a first outer block 335 and a first inner block 336. The first block piece 332, the second block piece 333, and the third block piece 334 may each include the first outer block 335 and the first inner block 336.

The first outer block 335 is a portion disposed to protrude to the outside of the cap plate 310 when the first terminal 330 is assembled with the cap plate 310. The first outer block 335 may have a width which is greater than that of the first terminal hole 312, and an edge portion may be disposed to face the outer side surface OS of the cap plate 310. The first outer block 335 may have a width which is greater than that of the first terminal hole 312 in the third direction, and an end portion of the first outer block 335 in the third direction may span or may be seated on the outer side surface OS of the cap plate 310 at the edge portion of the first terminal hole 312.

The first inner block 336 is a portion extending from the first outer block 335 toward the first connection member 320. In an embodiment, the first inner block 336 may have a width which is reduced compared to the first outer block 335, and may pass through the first terminal hole 312 and extend toward the inner side surface IS of the cap plate 310. An end portion of the first inner block 336 passing through the first terminal hole 312 may be in contact with the first connection member 320. The end portion of the first inner block 336 may be in contact with the first block connection portion 3221, the second block connection portion 3222, and the third block connection portion 3223.

The first terminal 330 may stably contact the bus bar 3 or an external power device through the first outer block 335 at the three positions corresponding to the first block piece 332, the second block piece 333, and the third block piece 334. The first terminal 330 may be stably joined to the first connection member 320 at the three positions corresponding to the first block piece 332, the second block piece 333, and the third block piece 334.

However, the first terminal 330 according to the present disclosure is not limited to having a structure in which the three block pieces 332, 333, and 334 are disposed spaced apart from each other as described above. The above description is provided as an example embodiment of the first terminal 330 according to the present disclosure and is not intended to limit a structure of the first terminal 330. For example, the first terminal 330 according to the present disclosure is not limited to a specific structure and shape, as long as the first terminal 330 has a structure in which only a portion of the first terminal hole 312 is covered by the first terminal block 331, and the first opening hole 337 is formed in another portion of the first terminal hole 312.

One first terminal block 331 having a width smaller than a width of the first terminal hole 312 may be provided. The one first terminal block 331 may be disposed to cover only a portion of the first terminal hole 312, and may also be disposed to be biased toward one side of the first terminal hole 312 in the second direction, or may be disposed in the middle. In an embodiment, the first terminal block 331 may have a width capable of covering the entire first terminal hole 312, and may have a structure in which the first opening hole 337 is formed to pass through the first terminal block 331 in the form of a hole.

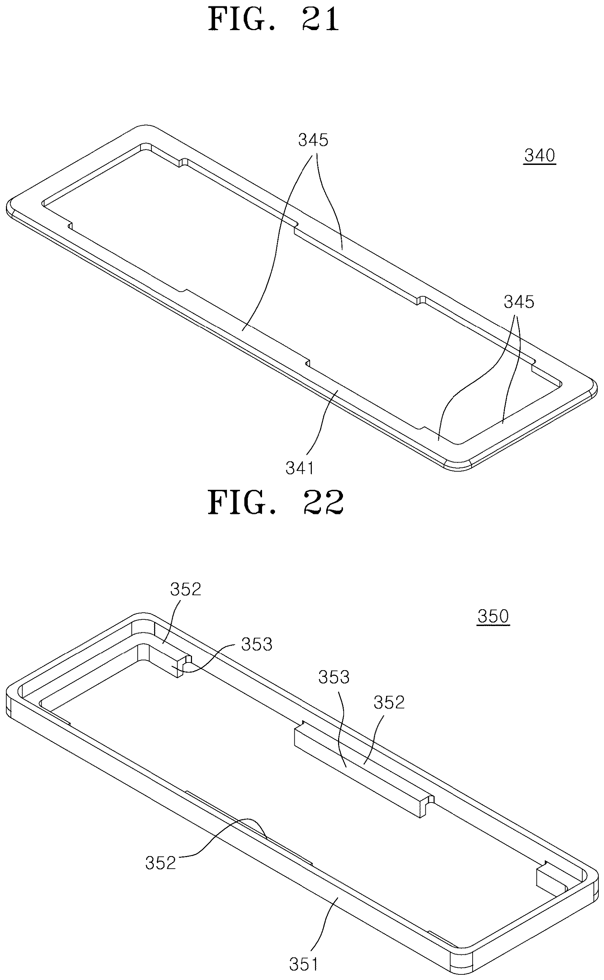

FIG. 21 is a perspective view schematically illustrating the first sealing member according to an embodiment of the present disclosure.

Referring to FIG. 21, the first sealing member 340 according to an embodiment of the present disclosure may include a first sealing portion 341 and a second sealing portion 345.

The first sealing portion 341 may have a band or ring shape extending along a perimeter of the first terminal hole 312, and may be located between the cap plate 310 and the first connection member 320. The first sealing portion 341 may have a thickness (e.g., a set thickness) greater than a recessed depth of the first assembly groove 315 and may be fitted into the first assembly groove 315. An outer side surface of the first sealing portion 341 may be in contact with a recessed bottom surface of the first assembly groove 315, and an outer edge portion of the first sealing portion 341 may be in contact with an edge portion of the first assembly groove 315.

The first sealing portion 341 according to an embodiment of the present disclosure may include a first close contact portion 342, a second close contact portion 343, and a first groove 344.

The first close contact portion 342 is a portion of the first sealing portion 341 which is in close contact with the cap plate 310. The first close contact portion 342 may be in surface contact with the recessed bottom surface of the first assembly groove 315. The bottom surface of the first assembly groove 315 may have a flat shape, and an outer side surface of the first close contact portion 342 may have a flat shape corresponding to the bottom surface of the first assembly groove 315.

The first close contact portion 342 may have a thickness greater than the recessed depth of the first assembly groove 315. An inner side surface of the first close contact portion 342 may be located to protrude from the inner side surface IS of the cap plate 310. The second sealing portion 345 may be formed to protrude from the first close contact portion 342 toward the first terminal hole 312. In an embodiment, the second sealing portion 345 may be integrally connected to the first close contact portion 342 and may have a same thickness as the first close contact portion 342.

The second close contact portion 343 is a portion of the first sealing portion 341 which is in contact with the first connection member 320. The second close contact portion 343 may be formed to protrude from the first close contact portion 342 toward the first connection member 320 and may be in contact with the first support 324 of the first connection member 320. The first sealing member 340 may have a thickness (e.g., a set thickness) which is a sum of a thickness of the second close contact portion 343 and a thickness of the first close contact portion 342.

The second close contact portion 343 may be formed to protrude at a position corresponding to an outer edge portion of the first support 324. Contact between the first connection member 320 and the first sealing member 340 may be closely formed in the first direction at a position corresponding to the second close contact portion 343 and the outer edge portion of the first support 324.

The first sealing member 340 may be made of a material having elasticity. The first close contact portion 342 and the second close contact portion 343 may be in elastic contact with the cap plate 310 and the first connection member 320, respectively. Airtightness between the cap plate 310 and the first connection member 320 may be stably secured by the elasticity of the first sealing member 340. In an embodiment, the first support 324 of the first connection member 320 may have elasticity by having a multi-bent shape. Since the elasticity of the first support 324 may be added to the elasticity of the first sealing portion 341, airtightness may be more stably secured.

The first groove 344 may be formed to be recessed in the first direction on the second close contact portion 343, and an edge of the first connection member 320 may be fitted into the first groove 344. The first groove 344 may be formed at a position corresponding to the outer edge portion of the first support 324 of the first connection member 320. The outer edge portion of the first support 324 may be fitted into the first groove 344 and thus may be brought into close contact with a recessed inner surface of the first groove 344 in multiple directions.

Since the first groove 344 is formed to be recessed in the first direction, contact between the first support 324 and the first sealing member 340 may be closely formed in the first direction on the first groove 344. Further, since the first groove 344 is formed to be recessed in the first direction, the outer edge portion of the first support 324 of the first connection member 320 may be guided and maintained in the first direction while being fitted into the first groove 344. Accordingly, the edge portion of the first connection member 320 may be prevented or substantially prevented from being separated to an arbitrary position or deformed into an arbitrary shape due to a load applied in the first direction during ultrasonic fusion.

The second sealing portion 345 may be formed to protrude from the first sealing portion 341 toward the first terminal hole 312, and may face the first insulating member 350 fitted into the first terminal hole 312. In an embodiment, the first sealing portion 341 may be continuously formed across the entire edge portion of the first terminal hole 312, and the second sealing portion 345 may be partially formed only at a position where the first terminal 330 is disposed.

The second sealing portion 345 may be formed at a position corresponding to the first terminal 330 to stably insulate the first terminal 330 from the cap plate 310. As the second sealing portion 345 is not formed at a position where the first terminal 330 is not disposed, that is, not formed at a position corresponding to the first opening hole 337, covering or interfering with the first opening hole 337 may be minimized or reduced. Accordingly, joining quality through the first opening hole 337 may be stably secured.

FIG. 22 is a perspective view schematically illustrating the first insulating member according to an embodiment of the present disclosure.

Referring to FIG. 22, the first insulating member 350 according to an embodiment of the present disclosure may include a first insulating portion 351, a second insulating portion 352, and a third insulating portion 353.

The first terminal 330 may include the first outer block 335 and the first inner block 336, and the first insulating portion 351, the second insulating portion 352, and the third insulating portion 353 may together form a shape corresponding to peripheral surfaces of the first outer block 335 and the first inner block 336.

The first insulating portion 351 may have a band or ring shape extending along the perimeter of the first terminal hole 312, and may be located between the first terminal 330 and the outer side surface OS of the cap plate 310. The first insulating portion 351 may have a cross-sectional shape which is upright in the first direction and may be in contact with a peripheral surface of the first outer block 335.

The first insulating portion 351 may have a length longer in the first direction than a recessed depth of the second assembly groove 316 of the cap plate 310, and may be fitted into the second assembly groove 316. An outer end portion of the first insulating portion 351 facing the first direction may protrude and may be exposed to the outside of the outer side surface OS of the cap plate 310. An inner end portion of the first insulating portion 351 facing the direction opposite to the first direction may be inserted into the second assembly groove 316. The inner end portion of the first insulating portion 351 may be seated on a recessed bottom surface of the second assembly groove 316, and a peripheral surface may be in contact with the edge portion of the second assembly groove 316.

The peripheral surface of the first insulating portion 351 may be caught or restrained on the second assembly groove 316 and the outer side surface OS of the cap plate 310. When assembling the first insulating member 350 to the cap plate 310, as the first insulating portion 351 is assembled such that the first insulating portion 351 is caught or restrained on the edge portion of the second assembly groove 316, the first insulating member 350 may be easily assembled at the intended target position on the cap plate 310.

The second insulating portion 352 is a portion which insulates the first outer block 335 from the cap plate 310 together with the first insulating portion 351. The second insulating portion 352 may be formed to protrude from the first insulating portion 351 toward the first terminal hole 312 and may be located between the outer side surface OS of the cap plate 310 and an inner side surface of the first outer block 335.

In an embodiment, the first insulating portion 351 may be continuously formed across the entire edge portion of the first terminal hole 312, and the second insulating portion 352 may be partially formed only at the position where the first terminal 330 is disposed. The second insulating portion 352 may be formed to protrude from the inner end portion of the first insulating portion 351 toward the first terminal hole 312 in the second and third directions. In an embodiment, an outer edge portion of the second insulating portion 352 may be integrally connected to the first insulating portion 351. An inner edge portion of the second insulating portion 352 may be located inside the first terminal hole 312.

When assembling the first insulating member 350 to the cap plate 310, the second insulating portion 352 may be disposed on the second assembly groove 316. The second insulating portion 352 may be fitted into the second assembly groove 316 and may be seated on the recessed bottom surface of the second assembly groove 316. The bottom surface of the second assembly groove 316 may have a flat shape, and an inner side surface IS of the second insulating portion 352 may have a flat shape corresponding to the bottom surface of the second assembly groove 316. An outer side surface OS of the second insulating portion 352 may be in contact with the inner side surface of the first outer block 335.

The third insulating portion 353 is a portion which insulates the first inner block 336 from the cap plate 310. The third insulating portion 353 may be connected to the second insulating portion 352 and may be located between the edge of the first terminal hole 312 and the first inner block 336 of the first terminal 330. The third insulating portion 353 may be formed to protrude from the second insulating portion 352 in the first direction and may be fitted into the first terminal hole 312.

The third insulating portion 353 has a cross-sectional shape which is upright in the first direction and may be fitted into the first terminal hole 312. An outer peripheral surface of the third insulating portion 353 may be in contact with the edge of the first terminal hole 312. An inner peripheral surface of the third insulating portion 353 may be in contact with a peripheral surface of the first inner block 336.

The third insulating portion 353 may be formed to protrude from the inner end portion of the second insulating portion 352 toward the first terminal hole 312 in the direction opposite to the first direction. In an embodiment, an outer end portion of the third insulating portion 353 may be integrally connected to the second insulating portion 352. An inner end portion of the third insulating portion 353 may face the first sealing member 340 and may be in contact with the second sealing portion 345 of the first sealing member 340.

While the third insulating portion 353 and the second sealing portion 345 are in contact with each other, the first sealing member 340 and the first insulating member 350 may continuously cover the second assembly groove 316, the edge portion of the first terminal hole 312, and the first assembly groove 315. Accordingly, when assembling the first connection member 320 and the first terminal 330 to the first terminal hole 312, the first assembly groove 315, and the second assembly groove 316, the first connection member 320 and the first terminal 330 may be stably insulated from the cap plate 310 by the first sealing member 340 and the first insulating member 350.

The second insulating portion 352 and the third insulating portion 353 may be formed at a position corresponding to the first terminal 330 and may stably insulate the first terminal 330 from the cap plate 310. In an embodiment, as the second insulating portion 352 and the third insulating portion 353 are not formed at the position where the first terminal 330 is not disposed, that is, not formed at the position corresponding to the first opening hole 337, covering or interfering with the first opening hole 337 may be minimized or reduced. Accordingly, joining quality through the first opening hole 337 may be stably secured.

When the first connection member 320 and the first terminal 330 are ultrasonically fused, a load may be applied to the first connection member 320 and the first terminal 330 in the first direction, and the load may also be transferred to the first insulating member 350 or the first sealing member 340. The load transferred from the first outer block 335 of the first terminal 330 to the first insulating member 350 may be concentrated and applied to the second insulating portion 352. In an embodiment, the second insulating portion 352 is formed of a material and having a thickness capable of implementing rigidity capable of supporting the load applied in the first direction when the ultrasonic fusion of the first connection member 320 and the first terminal 330 are ultrasonically fused.

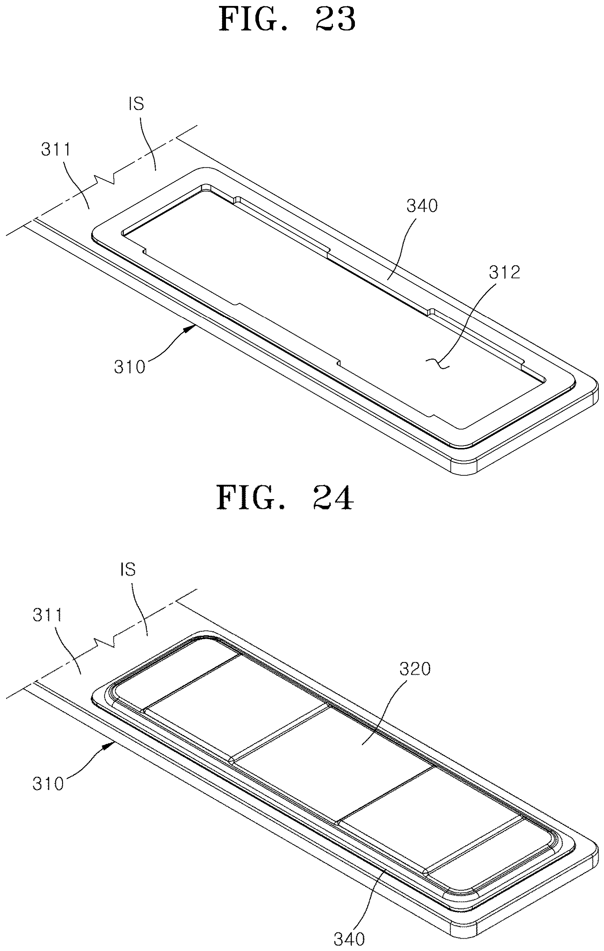

FIGS. 23 to 26 are views for describing a process of manufacturing the cap plate assembly according to an embodiment of the present disclosure.

Referring to FIGS. 23 to 26, in an embodiment, the first connection member 320 and the first terminal 330 may be joined to each other by ultrasonic fusion. The first sealing member 340 may be disposed between the cap plate 310 and the first connection member 320, and the first connection member 320 may be disposed between the cap plate 310 and the first terminal 330. In an embodiment, the first terminal 330 and the first connection member 320 may be joined to each other with the cap plate 310, the first sealing member 340, and the first insulating member 350 therebetween, and thus may be integrally bonded to the cap plate 310, the first sealing member 340, and the first insulating member 350.

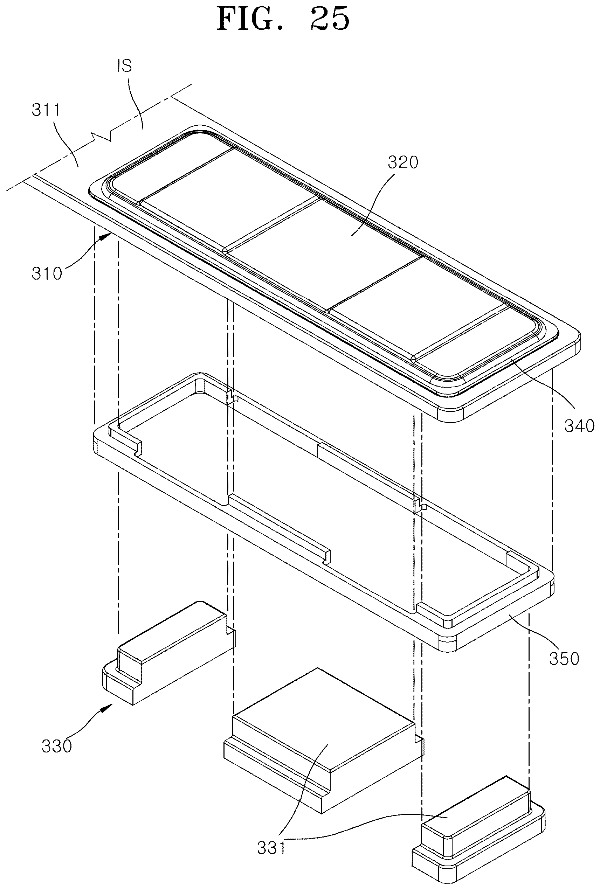

As illustrated in FIGS. 23 and 24, while the inner side surface IS of the cap plate 310 is disposed to face upward, the first connection member 320 may be seated on the first sealing member 340 after fitting the first sealing member 340 into the first terminal hole 312. The cap plate 310 in a state in which the first sealing member 340 and the first connection member 320 are loaded may be seated on the first terminal 330 and the first insulating member 350, as illustrated in FIG. 25. The assembly may be performed concurrently (e.g., simultaneously) or sequentially. Further, some of the assembly may be performed in a reverse order as desired.

In the state of the above arrangement, the first terminal 330, the first insulating member 350, the cap plate 310, the first sealing member 340, and the first connection member 320 may be sequentially located from a lower side. In this case, the first terminal 330 may be located at a lower side of the cap plate 310, and the first connection member 320 may be located at an upper side of the cap plate 310. The first outer block 335 of the first terminal 330 may be located to protrude downward from the cap plate 310.

Thus, while the first terminal 330, the first insulating member 350, the cap plate 310, the first sealing member 340, and the first connection member 320 are disposed, the first connection member 320 and the first terminal 330 may be welded to each other by ultrasonic fusion. The first terminal 330 may be seated and supported on an anvil 51 of an ultrasonic welder 5. A horn 52 of the ultrasonic welder 5 may press the first connection member 320 downward toward the first terminal 330, and may transmit ultrasonic vibrations to the first connection member 320.

The horn 52 may apply a load to the anvil 51 and transmit ultrasonic waves for fusion while being in contact with the first terminal connection plate 322 of the first connection member 320. Fusion marks may be formed in a contact portion with the horn 52, but since the first terminal 330 is not in contact with the horn 52, fusion marks are not formed on the first outer block 335 of the first terminal 330. Accordingly, the first terminal 330 may maintain its initial state without deformation or damage, and joining between the first terminal 330 and the bus bar 3 may be reliably performed with constant quality.

The anvil 51 and the horn 52 may be moved by air pressure, a motor, or the like, and may be attached to or detached from the first terminal 330 and the first connection member 320. The first terminal 330 and the first connection member 320 may receive ultrasonic vibrations of a certain (e.g., set) amplitude while constantly maintaining a mutual contact pressure without arbitrarily moving while being in contact with the anvil 51 and the horn 52.

The anvil 51 may have a width capable of encompassing the plurality of first terminal blocks 331. In an embodiment, end portions of the horn 52 may be disposed at three positions corresponding to the first block piece 332, the second block piece 333, and the third block piece 334, and ultrasonic fusion may be performed at a plurality of target positions while adjusting a position of the horn 52.

The first connection member 320 and the plurality of first terminal blocks 331 may be made of different materials and joined to each other by ultrasonic fusion. In an embodiment, for example, the first connection member 320 may be made of a material mainly composed of copper (Cu), and the first terminal 330 may be made of a material mainly composed of aluminum (Al).

When the first connection member 320 and the first terminal 330 are ultrasonically fused, the first sealing member 340 may be brought into close contact with the inner side surface IS of the cap plate 310 and the first connection member 320 with a strength corresponding to a joining strength between the first connection member 320 and the first terminal 330. The first insulating member 350 may be brought into close contact with the outer side surface OS of the cap plate 310 and the first terminal 330 with a strength corresponding to the joining strength between the first connection member 320 and the first terminal 330.

In an embodiment, the cap plate 310, the first connection member 320, the first terminal 330, the first sealing member 340, and the first insulating member 350 may be prevented or substantially prevented from arbitrarily moving, and may be firmly and integrally bonded while being in close contact with each other by the joining strength between the first connection member 320 and the first terminal 330. In an embodiment, the cap plate 310, the first connection member 320, the first terminal 330, the first sealing member 340, and the first insulating member 350 may form one single piece corresponding to the cap plate assembly 300 while being bonded to each other.

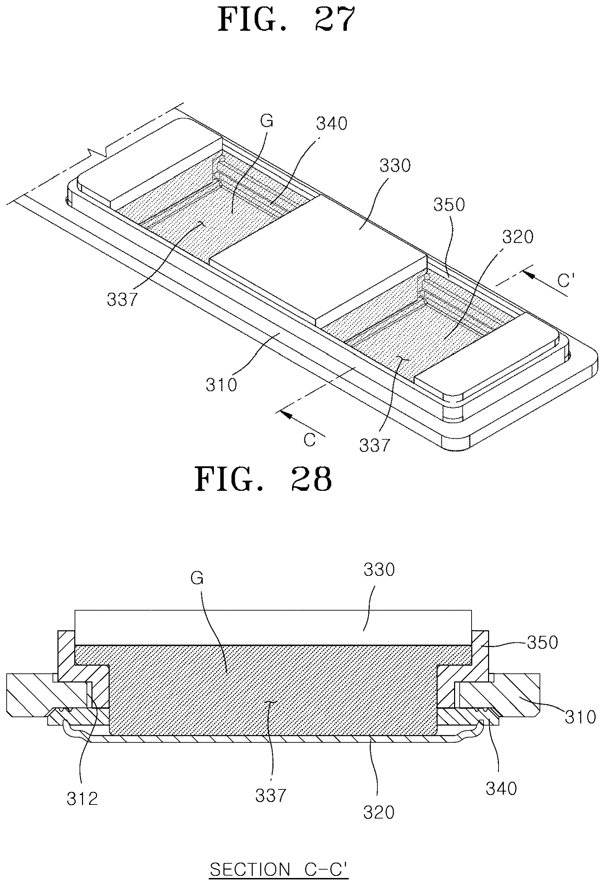

FIG. 27 is a perspective view schematically illustrating a main portion of a cap plate assembly according to another embodiment of the present disclosure; and FIG. 28 is a cross-sectional view taken along the line C-C' in FIG. 27.

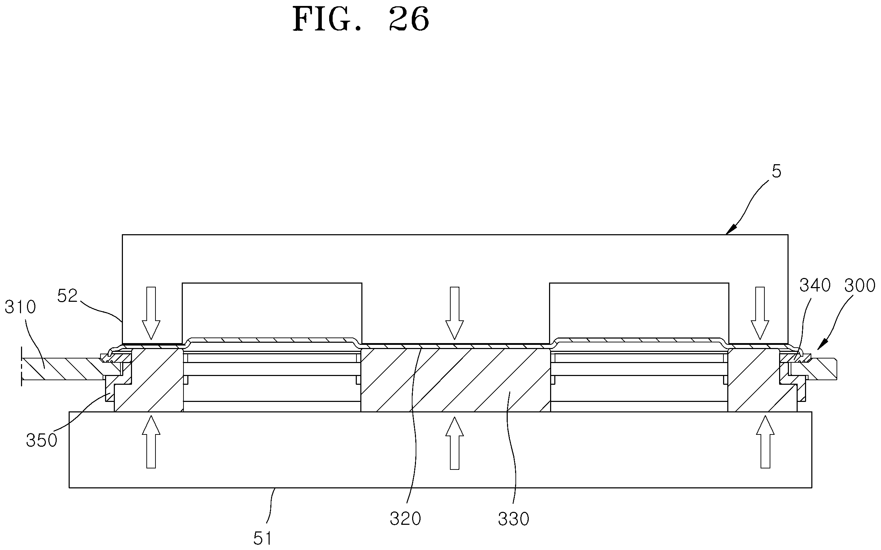

Referring to FIGS. 27 and 28, an adhesive member G may be applied to a cap plate assembly 300 according to the present embodiment. The adhesive member G may be filled into a first terminal hole 312 while a cap plate 310, a first connection member 320, a first terminal 330, a first sealing member 340, and a first insulating member 350 are bonded to each other through a joining process between the first connection member 320 and the first terminal 330, as illustrated in FIG. 26.

The adhesive member G may be applied to the first terminal hole 312 in the form of a liquid or a gel, and may be cured while being in contact with the first connection member 320 and the first terminal 330. First terminal blocks 331 and first opening holes 337 of the first terminal 330 may be disposed on the first terminal hole 312. The adhesive member G may be applied to and filled in the first opening hole 337 formed between the first terminal blocks 331.

While an outer side surface of the cap plate assembly 300 is located at an upper side, the first opening hole 337 may be located to be open upward in an upper portion of the cap plate assembly 300. The adhesive member G may be inserted into the first opening hole 337 from the upper side and potted.

The adhesive member G may be made of a transparent material, and a laser L may pass through the adhesive member G and reach the first connection member 320 from the outer side surface OS of the cap plate 310. The laser L which passes through the adhesive member G and reaches the first connection member 320 may function as energy which joins and welds the first connection member 320 and a first tab member 240 to each other.

In an embodiment, the adhesive member G may be ultraviolet (UV) glue. When the UV glue is applied as the adhesive member G, the UV glue may be applied on the first opening hole 337 in the form of a liquid or a gel, and then cured by irradiating ultraviolet (UV) light, for example, of 365 nm or the like.

When the first opening hole 337 is filled with the adhesive member G, the adhesive member G may be in contact with the first connection member 320 at a lower portion thereof in the first direction, in contact with peripheral surfaces of a plurality of first terminal blocks 331 in the second direction, and sequentially in contact with the first connection member 320, the first sealing member 340, the cap plate 310, and the first insulating member 350 from a lower side in the first direction. Accordingly, the first connection member 320, the first terminal block 331, the first sealing member 340, the cap plate 310, and the first insulating member 350 may be firmly and airtightly bonded to each other using the adhesive member G.

A second connection member 360, a second terminal 370, a second sealing member 380, and a second insulating member 390 according to the present embodiment may have structures the same as, similar to, or corresponding to the first connection member 320, the first terminal 330, the first sealing member 340, and the first insulating member 350, respectively, of the previously described embodiments. Accordingly, the description of specific structures and functions of the second connection member 360, the second terminal 370, the second sealing member 380, and the second insulating member 390 will be omitted and may be replaced with the detailed description of the first connection member 320, the first terminal 330, the first sealing member 340, and the first insulating member 350 according to the previously described embodiment.

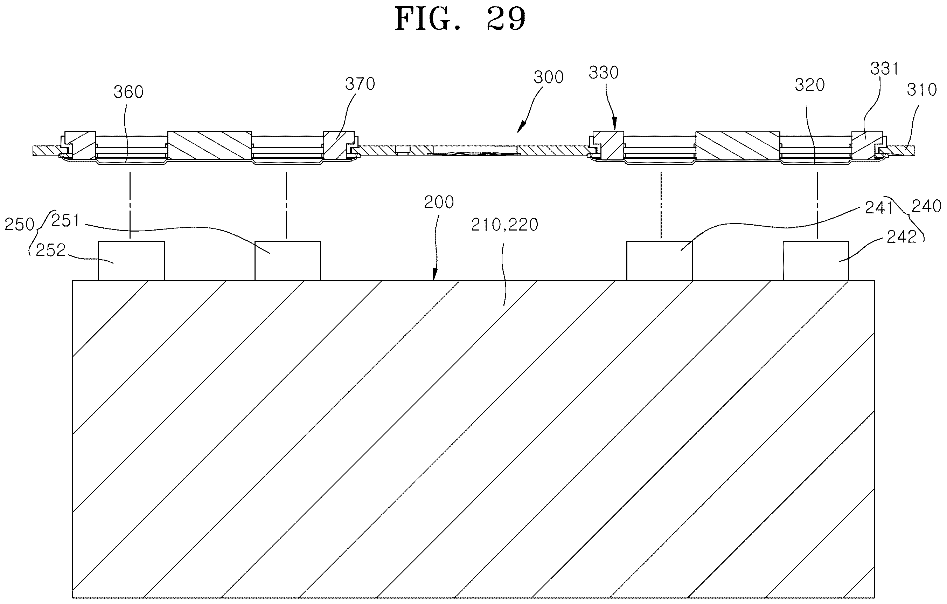

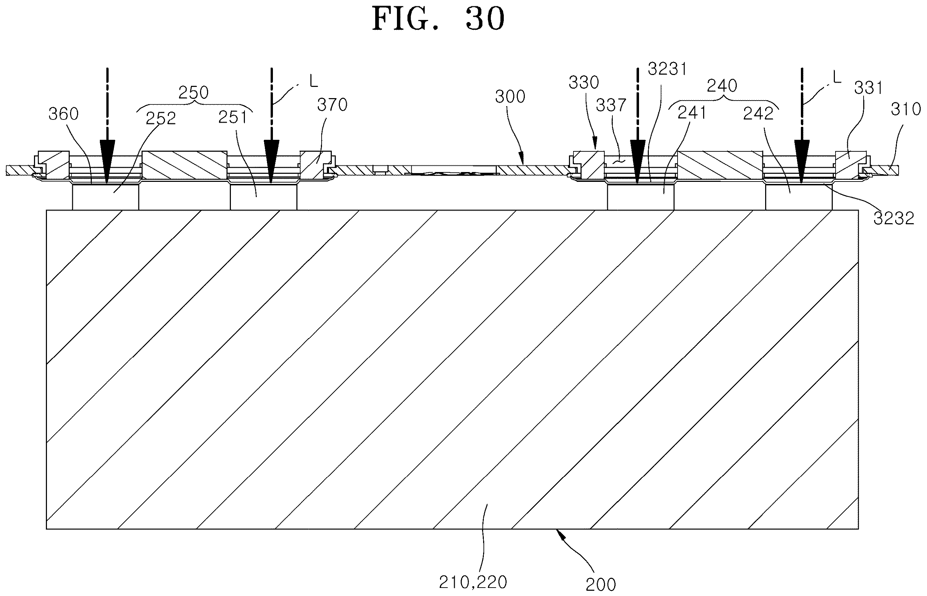

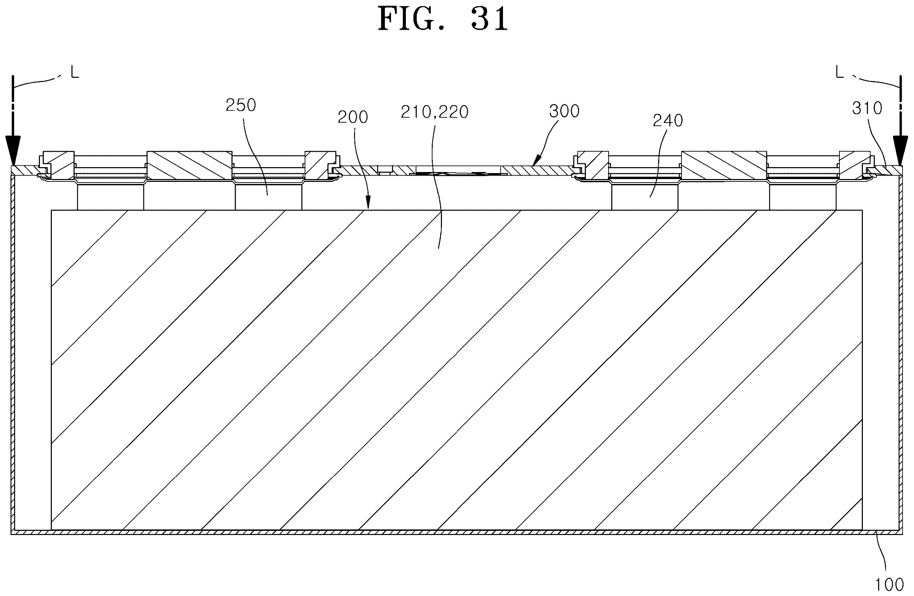

FIGS. 29 to 31 are views for describing a process of joining the case, the electrode assembly, and the cap plate assembly to each other according to an embodiment of the present disclosure.

Referring to FIGS. 29 to 31, while the cap plate assembly 300 and the electrode assembly 200 are disposed in contact with each other, the secondary battery 2 may be completed through a process of irradiating the laser L from the cap plate assembly 300 toward the electrode assembly 200 to join the cap plate assembly 300 and the electrode assembly 200 to each other, and then joining the cap plate 310 to the case 100 using the laser L again.

In the secondary battery 2 according to an embodiment of the present disclosure, while the first connection member 320 of the cap plate assembly 300 and the first tab member 240 of the electrode assembly 200 are disposed in contact with each other, as the laser L is irradiated from an outer side surface of the cap plate assembly 300 toward the first connection member 320, the first connection member 320 and the first tab member 240 may be joined to each other.

The laser L may reach the first connection member 320 through the first terminal hole 312. The laser L may pass through the first opening hole 337 disposed on the first terminal hole 312 and reach the first connection member 320. The first tab connection plate 323 of the first connection member 320 may be disposed to be exposed to the outside at a position corresponding to the first opening hole 337.

The laser L may pass through the first opening hole 337 and reach the first tab connection plate 323, and may directly weld the first tab connection plate 323 and the first tab member 240 to each other. The first inner tab connection portion 3231 and the first outer tab connection portion 3232 of the first tab connection plate 323 may be directly joined to the first inner tab member 241 and the first outer tab member 242 of the first tab member 240, respectively, by the laser L, and may be electrically connected to the first electrode 210.

In an embodiment, the first electrode 210 may be a positive electrode, and the first tab member 240 may function as a positive electrode tab of the secondary battery 2. The first connection member 320 may be joined to a plurality of first tab members 240 to function as a current collector. The first terminal 330 may be joined to the first connection member 320 and electrically connected to the first tab member 240, and may function as a positive electrode terminal of the secondary battery 2.

While the second connection member 360 of the cap plate assembly 300 and the second tab member 250 of the electrode assembly 200 are disposed in contact with each other, as the laser L is irradiated from the outer side surface of the cap plate assembly 300 toward the second connection member 360, the second connection member 360 and the second tab member 250 may be joined to each other.

The arrangement of the second connection member 360 and the second tab member 250 may be performed concurrently (e.g., simultaneously) with the arrangement of the first connection member 320 and the first tab member 240. The joining of the second connection member 360 to the second tab member 250 may be performed concurrently (e.g., simultaneously) with the joining of the first connection member 320 to the first tab member 240, or may be sequentially performed.

The laser L may reach the second connection member 360 through the second terminal hole 319. The laser L may pass through a space between the second terminals 370 disposed on the second terminal hole 319 and reach the second connection member 360. A portion of the second connection member 360 may be exposed to the outside through the space between the second terminals 370.

The laser L may pass through the space between the second terminals 370 and reach the second connection member 360, and may directly weld the second connection member 360 and the second tab member 250 to each other. The second connection member 360 may be directly joined to the second inner tab member 251 and the second outer tab member 252 of the second tab member 250 by the laser L and may be electrically connected to the second electrode 220.

In an embodiment, the second electrode 220 may be a negative electrode, and the second tab member 250 may function as a negative electrode tab of the secondary battery 2. The second connection member 360 may be joined to a plurality of second tab members 250 to function as a current collector. The second terminal 370 may be joined to the second connection member 360 and electrically connected to the second tab member 250, and may function as a negative electrode terminal of the secondary battery 2.

According to embodiments of the present disclosure having the above configuration, the cap plate assembly 300 may be manufactured with a structure in which the cap plate 310, the first connection member 320, and the first terminal 330 are bonded to each other by interconnecting the first connection member 320 and the first terminal 330 with the cap plate 310 therebetween. That is, the cap plate assembly 300 may have a structure including the first connection member 320 which functions as the current collector.

Accordingly, while the first connection member 320 of the cap plate assembly 300 is disposed in contact with the electrode assembly 200, as the laser L is irradiated to the first connection member 320 exposed to the outside, the first connection member 320 and the electrode assembly 200 may be directly joined. Accordingly, a number of welding processes may be reduced compared to a conventional case including a plurality of welding processes by laser welding a separate current collector member to the electrode assembly 200 and then welding a terminal of the cap plate assembly 300 to the current collector member again.

Further, according to embodiments of the present disclosure, when interconnecting the first connection member 320 and the first terminal 330, as the first connection member 320 and the first terminal 330 are joined to each other by ultrasonic fusion while the sealing members 340 and 380 and the insulating members 350 and 390 are disposed between the cap plate 310 and the first connection member 320 and the first terminal 330, the first connection member 320 and the first terminal 330 may be insulated from the cap plate 310 by a simple structure without a separate additional process.

Accordingly, a number of welding processes may be further reduced, and material and process costs may be significantly reduced compared to a conventional case of integrally joining the insulating member and the gasket to the cap plate and the terminal by insert injection molding.

According to embodiments of the present disclosure, a cap plate assembly can be manufactured in a structure in which a cap plate, a first connection member, and a first terminal are bonded to each other by interconnecting the first connection member and the first terminal with the cap plate therebetween. That is, the cap plate assembly can have a structure including a first connection member which functions as a current collector.

Accordingly, while the first connection member of the cap plate assembly is disposed in contact with an electrode assembly, as a laser is irradiated to the first connection member exposed to the outside, the first connection member and the electrode assembly can be directly joined. Accordingly, a number of welding processes can be reduced compared to a conventional case including a plurality of welding processes by laser welding a separate current collector member to the electrode assembly and then welding the terminal of the cap plate assembly to the current collector member again.

Further, according to embodiments of the present disclosure, when interconnecting the first connection member and the first terminal with the cap plate therebetween, as the first connection member and the first terminal are joined to each other by ultrasonic fusion while a sealing member and an insulating member are disposed between the cap plate and the first connection member and the first terminal, the first connection member and the first terminal are stably insulated from the cap plate by a simple structure without a separate additional process.

Accordingly, a number of welding processes can be further reduced, and material and process costs can be significantly reduced compared to a conventional case of integrally joining the sealing member and the insulating member to the cap plate and the terminal by insert injection molding.

However, aspects and effects obtainable through the present disclosure are not limited to the above aspects and effects, and other aspects and technical effects that are not mentioned will be clearly understood by those skilled in the art from the description of the present disclosure.

## Claims

1. A secondary battery (2) comprising:
a case (100);
an electrode assembly (200) accommodated in the case (100) and comprising a first electrode (210) and a second electrode (220); and
a cap plate assembly (300) coupled to an opening (160) of the case (100),
wherein the cap plate assembly (300) comprises:
a cap plate (310) including a first terminal hole (312);
a first connection member (320) on an inner side surface of the cap plate (310) and electrically connected to the first electrode (210); and
a first terminal (330) on an outer side surface of the cap plate (310) and connected to the first connection member (320) through the first terminal hole (312).

2. The secondary battery (2) as claimed in claim 1, wherein the first connection member (320) and the first terminal (330) are joined to each other with the cap plate (310) therebetween and integrally bonded with the cap plate (310).

3. The secondary battery (2) as claimed in claim 2, wherein the first connection member (320) and the first terminal (330) are made of different materials and joined to each other by ultrasonic fusion.

4. The secondary battery (2) as claimed in claim 3, wherein the first connection member (320) and the first terminal (330) are ultrasonically fused by supporting the first terminal (330) by an anvil (51) of an ultrasonic welder (5), and the first connection member (320) being pressed toward the first terminal (330) by a horn (52) of the ultrasonic welder (5) and receiving ultrasonic vibrations.

5. The secondary battery (2) as claimed in any one of the preceding claims, wherein the electrode assembly (200) comprises a first tab member (240) extending from the first electrode (210) toward the first connection member (320), and
the first connection member (320) is joined to the first tab member (240) by a laser passing through the first terminal hole (312);
wherein preferably the cap plate assembly (300) further comprises an adhesive member (G) applied to the first terminal hole (312) and cured while being in contact with the first connection member (320) and the first terminal (330), and
the laser preferably passes through the adhesive member (G) to reach the first connection member (320).

6. The secondary battery (2) as claimed in claim 5, wherein the first connection member (320) comprises:
a first connection main body that faces the first terminal hole (312) at the inner side surface of the cap plate (310) and is in contact with the first tab member (240); and
a first support (324) at an edge portion of the first connection main body and facing the inner side surface of the cap plate (310).

7. The secondary battery (2) as claimed in claim 6, wherein the first connection main body comprises:
a first terminal connection plate (322) that is in contact with the first terminal (330); and
a first tab connection plate (323) that is connected to the first terminal connection plate (322), in contact with the first tab member (240), and exposed to an outside of the cap plate (310);
wherein preferably the first connection member (320) further comprises one or more first grooves extended concavely toward the first tab member (240) on the first tab connection plate (323).

8. The secondary battery (2) as claimed in claim 7, wherein an outer side surface of the first tab connection plate (323) is exposed to the outside of the cap plate (310), and
an inner side surface of the first tab connection plate (323) faces the first tab member (240).

9. The secondary battery (2) as claimed in claim 7 or 8, wherein the first tab member (240) comprises:
a first inner tab member (241); and
a first outer tab member (242) spaced apart from the first inner tab member (241), and
the first tab connection plate (323) comprises:
a first inner tab connection portion that is in contact with the first inner tab member (241); and
a first outer tab connection portion that is spaced apart from the first inner tab connection portion and is in contact with the first outer tab member (242).

10. The secondary battery (2) as claimed in claim 9, wherein the first terminal connection plate (322) comprises a first block connection portion (3221) that is in contact with the first terminal (330) between the first inner tab connection portion and the first outer tab connection portion.

11. The secondary battery (2) as claimed in claim 10, wherein the first terminal connection plate (322) further comprises a second block connection portion (3222) spaced apart from the first block connection portion (3221) with the first inner tab connection portion therebetween.

12. The secondary battery (2) as claimed in claim 10 or 11, wherein the first terminal connection plate (322) further comprises a third block connection portion (3223) spaced apart from the first block connection portion (3221) with the first outer tab connection portion therebetween.

13. The secondary battery (2) as claimed in claim any one of the claims 10 ro 12, wherein the first terminal (330) comprises:
a first block piece (332) that is in contact with the first block connection portion (3221);
a second block piece (333) spaced apart from the first block piece (332) with the first inner tab connection portion therebetween; and
a third block piece (334) spaced apart from the first block piece (332) with the first outer tab connection portion therebetween.

14. The secondary battery (2) as claimed in any one of the preceding claims, wherein the first terminal (330) comprises:
one or more first terminal blocks (331) facing the first connection member (320); and
one or more first opening holes (337) open between the first terminal blocks (331) and forming a path through which joining energy may pass and reach the first connection member (320);
wherein preferably the first terminal block (331) comprises:
a first block piece (332) on the first terminal hole (312); and
a second block piece (333) spaced apart from the first block piece (332) on the first terminal hole (312), and defining a first opening hole (337) of the one or more first opening holes (337) between the first block piece (332) and the second block piece (333).
wherein further preferably the first terminal block (331) further comprises a third block piece (334) spaced apart from the first block piece (332) on an opposite side from the second block piece (333) and defining a first opening hole (337) of the one or more first opening holes (337) between the first block piece (332) and the third block piece (334).

15. A battery module comprising:
a housing (1); and
a plurality of secondary batteries (2) accommodated in the housing (1),
wherein each of the secondary batteries (2) comprises:
a case (100);
an electrode assembly (200) accommodated in the case (100) and comprising a first electrode (210) and a second electrode (220); and
a cap plate assembly (300) coupled to an opening (160) of the case (100), and
the cap plate assembly (300) comprises:
a cap plate (310) including a first terminal hole (312);
a first connection member (320) on an inner side surface of the cap plate (310) and electrically connected to the first electrode (210); and
a first terminal (330) on an outer side surface of the cap plate (310) and connected to the first connection member (320) through the first terminal hole (312).
